# EUROPEAN PATENT APPLICATION

(11) **EP 4 700 930 A1**
(43) Date of publication of application: **25.02.2026**
(21) Application number: 25195441.8
(22) Date of filing: 12.08.2025
(51) Int. Cl.: H01M 50/147, H01M 50/176, H01M 50/538, H01M 50/547

(54) **CURRENT COLLECTOR FOR SECONDARY BATTERIES, SECONDARY BATTERY INCLUDING THE SAME, AND METHOD OF MANUFACTURING CURRENT COLLECTOR FOR SECONDARY BATTERIES**

(30) Priority: 21.08.2024 KR 20240112190; 28.10.2024 KR 20240149042; 11.08.2025 KR 20250110878
(71) Applicant: LG Energy Solution, Ltd., Seoul 07335 (KR)
(72) Inventor: DO, Jin Uk, Daejeon 34122 (KR); PARK, Jin Sub, Daejeon 34122 (KR)
(74) Representative: Goddar, Heinz J.

(57) **Abstract**

Disclosed herein is a current collector for a secondary battery, a secondary battery and a method of manufacturing a current collector for a secondary battery. The current collector according to the present disclosure comprises a first current collection component provided with a first connection terminal for connecting to a first terminal of the secondary battery, a second current collection component provided with a second connection terminal for connecting to a second terminal of the secondary battery, and an insulating spacer coupled to an edge surface of the first current collection component and an edge surface of the second current collection component the insulating spacer connecting the first current collection component and the second current collection component (530) so as to be spaced apart from each other.

## Description

### CROSS-REFERENCE TO RELATED APPLICATIONS

The present application claims priority to and the benefit of Korean Patent Application Nos. 10-2024-0112190, and 10-2024-0149042, respectively filed on August 21, 2024, and October 28, 2024 in the Korean Intellectual Property Office, the entire disclosure of which is incorporated herein by reference.

### TECHNICAL FIELD

The present disclosure relates to a current collector for a secondary battery, a secondary battery including the current collector, and a method of manufacturing a current collector for a secondary battery.

### BACKGROUND

Recently, as the demand for portable electronic devices such as notebook computers, video cameras, and mobile phones has rapidly increased and the development of electric vehicles, energy storage batteries, robots, satellites, and the like has been actively promoted, intensive research has been conducted on high-performance secondary batteries capable of repeated charging and discharging.

Currently commercialized secondary batteries may include nickel-cadmium batteries, nickel-metal hydride batteries, nickel-zinc batteries, lithium secondary batteries, and the like. Among the secondary batteries listed above, lithium secondary batteries are attracting attention due to advantages such as allowing flexible charging and discharging owing to negligible memory effect compared to nickel-based secondary batteries, exhibiting a significantly low self-discharge rate, and having a relatively high energy density.

Such lithium secondary batteries mainly use a lithium-based oxide and a carbon material as a positive electrode active material and a negative electrode active material, respectively. In addition, the lithium secondary battery may include a positive electrode plate and a negative electrode plate on which the positive electrode active material and the negative electrode active material are respectively applied, an electrode assembly in which the positive electrode plate and the negative electrode plate are located with a separator interposed therebetween, and an external housing that seals and accommodates the electrode assembly together with an electrolyte.

Secondary batteries such as lithium secondary batteries may be classified, according to the shape of a battery casing, into a can-type secondary battery, in which an electrode assembly may be embedded in a rigid housing (e.g., a metal can), and a pouch-type secondary battery in which an electrode assembly may be embedded in a pouch formed of a sheet (e.g., an aluminum laminate sheet). The can-type secondary battery may also be classified into a cylindrical secondary battery and a prismatic secondary battery according to the shape of the housing (e.g., the metal can).
A secondary battery such as a prismatic secondary battery may be subjected to a process including gathering a plurality of electrode tabs (e.g., thin film tabs) connected to electrode plates into one, optionally pre-welding the collected electrode tabs, and then welding the (e.g., pre-welded) electrode tabs to a current collection component. The current collection component to which the electrode tabs are welded may be connected to a terminal of the battery (e.g., a terminal of a cap assembly).

### SUMMARY

A positive electrode current collection component and a negative electrode current collection component may be individually coupled to the terminals and/or the cap assembly. However, if even one of the respective current collection components is not aligned with a coupling position of the terminal and/or the cap assembly, it may be difficult to connect the current collection component to the corresponding terminal. In this case, since the current collection component may already be welded to the electrode tabs (e.g., the thin film tabs), it may be difficult to correct the coupling position, which may result in reduced assemblability with the terminals and/or the cap assembly.

To solve the above problems, an object of the present disclosure is to provide a current collector for a secondary battery having a current collection component providing improved assemblability with a terminal and/or a cap assembly, and a secondary battery including the current collector.

A current collector for a secondary battery, a secondary battery comprising a current collector and a method of manufacturing a current collector for a secondary battery are provided. Any feature or combination(s) of features described herein with regard to the current collector according to the present disclosure may also be present for the secondary battery and/or the method according to the present disclosure, and vice-versa. For the sake of brevity and to avoid unnecessary repetition, certain feature(s) or combination(s) of features may therefore only be described once with regard to either the current collector, the secondary battery or the method, but may likewise apply to the other ones of the current collector, the secondary battery and the method.

A current collector for a secondary battery according to an embodiment of the present disclosure may include a first current collection component provided with a first connection terminal (which may, e.g., be for connecting to a first terminal of the secondary battery), a second current collection component provided with a second connection terminal (which may, e.g., be for connecting to a second terminal of the secondary battery), and an insulating spacer (which may also be referred to as an insulating connector) coupled to an edge surface (which may also be referred to as a side surface) of the first current collection component and an edge (or side) surface of the second current collection component, the insulating spacer connecting the first current collection component and the second current collection component so as to be spaced apart from each other (e.g., connecting the first current collection component and the second current collection component that are spaced apart from each other).

The current collector may be configured for use in a secondary battery, in particular any embodiment of the secondary battery according to the present disclosure. The current collector may for example be configured to be arranged in a housing of the secondary battery. The secondary battery is not particularly limited. The secondary battery may be configured to be charged and discharged. The secondary battery may be a can-type secondary battery, in particular a prismatic secondary battery.

The current collector may for example be manufactured by any embodiment of the method for manufacturing a current collector according to the present disclosure.

The current collector may be configured to pass current (e.g., provide a conductive path) from an electrode assembly of the secondary battery to terminals of the secondary battery (e.g., the external terminals of the secondary battery, which may be used for connecting to the secondary battery from the outside). In some examples, the current collector may be configured to collect the current from a plurality of electrode portions (e.g., electrode sheets or plates and/or portions of an electrode sheet or plate) of the electrode assembly.

For this, the current collector comprises the first and second current collection components, wherein the first current collection component may for example be configured to pass current from a first electrode (which may, e.g., comprise a plurality of first electrode portions) of the electrode assembly to the first terminal and the second current collection component may for example be configured to pass current from a second electrode (which may, e.g., comprise a plurality of first electrode portions) of the electrode assembly to the second terminal.

Each of the first and second current collection components may be made of (e.g., comprise or consist of) an electrically conductive material such as metal. Each of the first and second current collection components may be embodied as a single piece (e.g., an integrally formed single piece) and/or as a multi-piece assembly (e.g., by attaching a plurality of pieces).

One or both of the first and second current collection components may comprise a base (e.g., a base plate or base structure), for example for connecting to the electrode assembly and, optionally, collecting current from a plurality of electrode portions.

Each of the first and second current collection components is provided with a respective connection terminal that is configured to (electrically) connect to the respective terminal of the secondary battery, e.g., through a housing part such as a cap or a (side or bottom) wall of the housing of the secondary battery. One or both of the first and second connection terminals may protrude from the respective current collection component (e.g., the base thereof) and may for example be embodied as a post-shaped (e.g., cylindrical) protrusion, e.g., as detailed below.

A side or surface of the first or second current collection component at which the respective connection terminal is provided may be referred to as an upper (or top) side or surface herein (which may, e.g., face or be to face towards an outside of the secondary battery and in this case may also be referred to as the outer side or surface). A side or surface opposite to the respective connection terminal is provided (e.g., opposite to the side or surface at which the respective connection terminal is provided) may be referred to as a lower (or bottom) side or surface (which may, e.g., face or be to face an interior of the secondary battery, e.g., an electrode assembly thereof, and in this case may also be referred to as an inner side or surface). Spatially relative terms (such as upper, top, lower, bottom, above or below) with respect to the first and second current collection components and/or the insulating spacer may be used in this sense (e.g., a side or surface of the insulating spacer facing in the same direction as the upper or lower side or surface of the first (or second) current collection component may be referred to as the upper (top) and lower (bottom) side or surface of the insulating spacer, respectively). The upper and lower surfaces of the first or second current collection component may for example be formed by the base of the respective current collection component.

The insulating spacer (which may also be referred to as the insulating connector herein) is arranged between the first and second current collection components, in particular between the edge surface of the first current collection component and the edge surface of the second current collection component. The insulating spacer serves to spatially separate (and electrically insulate) the first and second current collection components (e.g., said edges surfaces thereof) from each other. The insulating spacer is made of (e.g., comprises or consists of) an electrically insulating material (e.g., plastic).

The insulating spacer connects (e.g., extends between and/or joins) the first and second current collection components (e.g., said edge surfaces thereof). The insulating spacer may hold (e.g., fasten, fix and/or attach) the first and second current collection components together.

The insulating spacer is coupled to (e.g., in contact with and/or attached to) the edge surfaces of the first and second current collection components (e.g., edge surfaces of a base of the respective current collection component). Put differently, the insulating spacer is coupled to the first and second current collection components laterally (from the side), for example rather than (or rather than only) from main/face sides (e.g., top/front and bottom/back sides).

As used herein, an edge surface (which may also be referred to as side surface) of an object (e.g., the first or second current collection component) may refer to a surface forming an edge (or a part thereof) of the object, for example a surface extending along (parallel to or substantially parallel to) a direction of smallest extent (herein referred to as thickness direction) of the object, e.g., between main/face sides (e.g., front and back sides) to the object. In the case of the first and second current collection components, the edge surface may for example extend between the lower and upper surface of the respective current collection component, e.g., as defined above.

As used herein, two directions, elements or the like being substantially parallel (or similar expressions such as being/extending in substantially the same direction) may for example refer to the directions and elements, respectively, being (e.g., extending or projecting) at an (acute) angle of between -20° and 20°, in some examples between -10° and 10°, in one example between -5° and 5° and in one example between -2° and 2° to each other. Similarly, two directions, elements or the like being substantially perpendicular (or similar expressions such as orthogonal or being/extending in substantially perpendicular direction) may for example refer to the directions and elements, respectively, being (e.g., extending or projecting) at an angle of between 70° and 110°, in some examples between 80° and 100°, in one example between 85° and 95° and in one example between 88° and 92° to each other.

The insulating spacer may connect the first and second current collection components so as to be spaced apart from each other by at least a minimum distance (e.g., maintain the first and second current collection component at a distance equal to or greater than the minimum distance), in some examples so as to be spaced apart from each other by a constant distance (e.g., maintain the first and second current collection component at a distance equal to the constant/fixed distance).

The insulating spacer (insulating connector) may include an intermediate connection portion connecting the edge surface (side surface) of the first current collection component and the edge surface (side surface) of the second current collection component to each other.

The insulating spacer may additionally comprise one or both of a first wing portion on (e.g., formed on) one side (a first side) of the intermediate connection portion and a second wing portion on (e.g., formed on) another side (a second side opposite to the first side) of the intermediate connection portion. In some examples, the first wing portion (e.g., an upper surface thereof) is arranged (e.g., located) on (e.g., in contact with) a lower surface of the first current collection component (which may, e.g., be opposite to the first connection terminal). In some examples, the second wing portion (e.g., an upper surface thereof) may be arranged (e.g., located) on (e.g., in contact with) a lower surface of the second current collection component (which may, e.g., be opposite to the second connection terminal).

The intermediate connection portion (e.g., edge surfaces thereof on the first and second sides of the intermediate connection portion) may be coupled to the edge surfaces of the first and second current collection components.

The first wing portion and/or the second wing portion may be coupled to (e.g., in contact with and/or attached to) the lower surface of the first and second current collection component, respectively.

In some examples, the insulating spacer may consist of the intermediate connection portion and, optionally, one or both of the first and second wing portions (i.e., may not comprise any other portions or elements).

The insulating spacer (e.g., its upper surface) may comprise (e.g., form) a (respective) step between the intermediate connection portion and one or both of the first and second wing portions, for example so as to have a podium shape with a protruding (e.g. higher) intermediate connection portion arranged between (e.g., recessed/lower) wing portions. Put differently, upper surfaces of the first and/or second wing portions (on the connection terminal side) may be recessed with respect to the upper surface of the intermediate connection portion. The intermediate connection portion may form a protrusion (e.g., a platform or pedestal) on the upper surface of the insulating spacer. The step(s) between the intermediate connection portion and the first and/or second wing portions may form said edge surface(s) of the intermediate connection portion.

Lower surfaces of the intermediate connection portion and one or both of the first and second wing portions may be aligned with each other (e.g., flush or at a same level, for example when viewed in the direction from the respective wing portion to the intermediate connection portion or the other wing portion), e.g., so as to jointly form a level surface. In some examples, the insulating spacer (as a whole) may have a level lower surface (e.g., at a same level or flat, such as without any steps, protrusions and/or depressions), e.g., as detailed below.

A thickness of the intermediate connection portion may be larger than (e.g., at least 1.5 times as large, in some examples at least 2.0 times as large as, in one example at least 3.0 times as large as) a thickness of one or both of the first and second wing portions. Additionally or alternatively, some or all of the intermediate connection portion and the first and second wing portions may each have a uniform thickness (within the respective portion). The thickness may for example be measured in a direction of smallest extent of the respective portion and/or in a direction from the lower surface of the first (or second) current collection component to the upper surface.

In some examples, the first wing portion (e.g., the upper surface thereof) may fully cover the lower surface of the first current collection component (i.e., the entire lower surface of the first current collection component). Additionally or alternatively, the second wing portion (e.g., the upper surface thereof) may fully cover the lower surface of the second current collection component (i.e., the entire lower surface of the second current collection component).

A cross-section of the first wing portion (e.g., in a plane parallel to the lower surface of the first current collection component), in particular the upper surface of the first wing portion, may be congruent with (e.g., of same shape and size as) the lower surface of the first current collection component (e.g., such that the first wing portion fully covers the lower surface of the first current collection component without protruding beyond the edge of the lower surface).

Additionally or alternatively, a cross-section of the second wing portion (e.g., in a plane parallel to the lower surface of the second current collection component), in particular the upper surface of the second wing portion, may be congruent with the lower surface of the second current collection component (e.g., such that the second wing portion fully covers the lower surface of the second current collection component without protruding beyond the edge of the lower surface).

Put differently, a shape of the first wing portion may correspond to a shape of the first current collection component and/or a shape of the second wing portion may correspond to a shape of the second current collection component.

In some examples, the first wing portion may partially cover the lower surface of the first current collection component (e.g., between 20% and 80%, in some examples between 30% and 70% of a surface area of the lower surface). Additionally or alternatively, the second wing portion may partially cover the lower surface of the second current collection component (e.g., between 20% and 80%, in some examples between 30% and 70% of a surface area of the lower surface).

Put differently, the first wing portion may be located to cover a portion of the lower surface of the first current collection component and/or the second wing portion may be located to cover a portion of the lower surface of the second current collection component.

The intermediate connection portion, and optionally one or both of the first wing portion and the second wing portion, may be formed of an insulating material.

In some examples, the intermediate connection portion and one or both of the first wing portion and the second wing portion may be formed of a same material.

The intermediate connection portion and one or both of the first wing portion and the second wing portion may be integrally formed (e.g., as a singe piece). In one example, the entire insulating spacer may be integrally formed.

One or both of the first wing portion and the second wing portion may each comprise a cutout in an edge surface thereof, in particular a pair of cutouts in opposite edge surfaces thereof. The cutout(s) may for example each be formed in an edge surface of the respective wing portion extending away from the intermediate connection portion (e.g., in a direction from the first wing portion to the second wing portion or vice-versa) and/or in an edge surface of the respective wing portion facing away from the intermediate connection portion (e.g., extending perpendicular or substantially perpendicular to a direction from the first wing portion to the second wing portion). In some examples, the cutout(s) may abut the intermediate connection portion and/or may be formed in a corner portion of the respective wing portion facing away from the intermediate connection portion. In some examples, the pair of cutouts may be arranged such that the respective wing portion has a step-like (e.g., Z-like and/or S-like shape) or a fork-like (Y-like) shape (e.g., with a third cutout in a third edge surface so as to form the legs of the fork/Y), for example when viewed in the direction perpendicular to the lower surface of the respective current collection component. The cutout(s) may be configured for arranging an electrode tab (e.g., a plurality of electrode tabs) of the secondary battery therein, e.g., for routing the electrode tab(s) to an upper surface of the respective current collection component or for coupling the electrode tab(s) to a lower surface of the respective current collection component.

The insulating connector may be fabricated by injection molding (i.e., the insulating spacer may be or comprise an injection-molded part).

One or more edge surfaces of the first current collection component and/or one or more edge surfaces of the second current collection component may be aligned with a respective edge surface of the insulating spacer (e.g., when viewed perpendicular to the lower surface of the respective current collection component). The respective edge surfaces may for example be aligned such that the edge surfaces are flush with each other, e.g., along at least part of their length or along their entire length. The respective current collection component may for example comprise an edge surface facing away from the other current collection component (e.g., extending perpendicular or substantially perpendicular to a direction from the first current collection component to the second current collection component) that is aligned with a respective edge surface of the insulating spacer. Additionally or alternatively, the respective current collection component may comprise an edge surface extending along a direction from the first current collection component to the second current collection component or vice-versa (e.g., away from the intermediate connection portion), preferably a pair of such edge surfaces being opposite to each other, that is/are each aligned with a respective edge surface of the insulating spacer.

One or both of the first and second current collection components may be a planar current collection member with the first and second connection terminal, respectively, provided thereon. Put differently, the respective current collection component (with the exception of the connection terminal) may extend in a single plane (e.g., parallel to the plane). The respective current collection component may for example have (e.g., parallel or substantially parallel) upper and lower surfaces that are each level (e.g., at a (respective) same level or flat, such as without any steps, protrusions or depressions formed therein). The respective current collection component may for example comprise a planar base, e.g., a base plate, a planar bar, a planar strip or a similar planar base structure. The connection terminal may protrude from the planar current collection member, e.g., from the planar base.

An upper surface of the current collector (e.g., excluding the first and second connection terminals) may be level (e.g., be at a same level or flat (have a flat shape), such as without any steps, protrusions or depressions formed thereon). The upper surface of the current collector may be formed by an upper surface of the first current collection component (on which the first connection terminal is provided), an upper surface of the second current collection component (on which the second connection terminal is provided) and an upper surface of the insulating spacer extending between the upper surfaces of the first and second current collection components. In other words, upper surfaces of the first and second current collection components and of the insulating spacer may be aligned with each other (e.g., flush with each other), for example when viewed in the direction from the first current collection component to the second current collection component.

Additionally or alternatively, a lower surface of the current collector may be level. The lower surface of the current collector may be formed by a lower surface of the insulating spacer opposite to the upper surface of the insulating spacer (e.g., the lower surface of the intermediate connection portion and, optionally, the first and/or second wing portions) and, optionally, one or both of the lower surface of the first current collection component opposite to the first connection terminal and the lower surface of the second current collection component opposite to the second connection terminal. In other words, the lower surface of current collector may be level (e.g., at least the lower surface of the intermediate connection portion, which may additionally be level (aligned) with the lower surfaces of the first and/or second wing portion, if present) and, in particular in embodiments without the first and/or second wing portion, may be level (aligned) with the lower surfaces of one or both of the first and second current collection components (for example when viewed in the direction from the first current collection component to the second current collection component).

One or both of the first and second connection terminals may protrude from the first and second current collection component (e.g., a base thereof), respectively. The respective connection terminal may for example be a post-shaped protrusion (e.g., a post, rod or pin protruding from the respective current collection component). The respective connection terminal may have an elliptical (e.g., circular) or polygonal (e.g., rectangular) cross-section and may, e.g., be embodied as a cylindrical or cuboidal (e.g., rectangular cuboidal) post, rod or pin. The respective connection terminal may protrude so as to extend (or be configured to extend) through a housing part of the secondary battery (such as a cap or a (side or bottom) wall of the housing), e.g., so as to provide an electrical connection between the inside and outside of the secondary battery.

Additionally or alternatively, one or both of the first and second connection terminals may be integrally formed with the first and second current collection component, respectively (rather than, e.g., being a separate piece that is attached and/or otherwise connected to the respective connection terminal).

A contact surface of the insulating spacer (e.g., an edge surface (side surface) of the insulating spacer such as an edge surface of the intermediate connection portion) that is in contact with the edge surface of the first current collection component may be perpendicular to or inclined (e.g., at a non-zero angle other than 90°) with respect to the upper surface of the insulating spacer (e.g., an upper surface of the intermediate connection portion). Said upper surface may, e.g., extend between the upper surfaces of the first and second current collection components (on which the first and second connection terminals, respectively, are provided). The contact surface of the insulating spacer may for example be (e.g., extend) at an obtuse angle (> 90°) to the upper surface (e.g., such that the insulating spacer or the respective portion thereof widens from the upper surface towards the lower surface), for example at an angle of between 100° and 170°, in some examples between 110° and 150°, in some examples between 120° and 140°.

Additionally or alternatively, a contact surface of the insulating spacer that is in contact with the edge surface of the second current collection component is perpendicular to or inclined with respect to the upper surface of the insulating spacer (which may, e.g., extend between the upper surfaces of the first and second current collection components on which the first and second connection terminals, respectively, are provided), for example as described above for the contact surface that is in contact with the edge surface of the first current collection component. Put differently, side surfaces of the intermediate connection portion that are in contact with the first current collection component and the second current collection component may each have a cross-section perpendicular to an upper surface of the intermediate connection portion or

the side surfaces of the intermediate connection portion that are in contact with the first current collection component and the second current collection component may each have an inclined cross-section (e.g., with respect to the upper surface of the intermediate connection portion).

One or both of the first and second current collection components may include a cutout (which may also be referred to as a first cutout) in (e.g., formed in) an edge surface (side surface) thereof. Optionally, the respective current collection component may include a second cutout, for example in (e.g., formed in) a remaining side surface (e.g., a different edge surface) thereof, e.g., as detailed below.

The cutout(s) in the respective current collection component may for example each be formed in an edge surface of the respective current collection component extending away from the edge surface of the respective current collection component coupled to the insulating spacer (e.g., away from the intermediate connection portion and/or in a direction away from the other current collection component) and/or in an edge surface of the respective current collection component opposite to the edge surface of the respective current collection component coupled to the insulating spacer (e.g., facing away from the intermediate connection portion and/or the other current collection component, and/or extending perpendicular or substantially perpendicular to a direction from the first current collection component to the second current collection component). In some examples, the cutout(s) may extend up to (and, optionally, along a part of) the edge surface of the respective current collection component coupled to the insulating spacer (e.g., may abut the intermediate connection portion). Additionally or alternatively, the cutout(s) may be formed in a corner portion of the respective current collection component, e.g., a corner portion abutting the edge surface of the respective current collection component coupled to the insulating spacer (e.g., a corner portion facing the intermediate connection portion) and/or a corner portion facing away from the edge surface of the respective current collection component coupled to the insulating spacer (e.g., facing away from the intermediate connection portion). In some examples, the respective current collection component and the respective one of the first and second wing portions arranged on the lower surface of the respective current collection component may each include one or more matching cutouts (e.g., cutouts at a same position and in some examples congruent cutouts).

The cutout(s) in the respective current collection component may be configured for arranging an electrode tab (e.g., a plurality of electrode tabs) of the secondary battery therein, e.g., for routing the electrode tab(s) to an upper surface of the respective current collection component.

In some examples, one or both of the first and second current collection components may include a pair of cutouts (e.g., the first and second cutouts, which may be embodied as described above) in opposite edge surfaces of the respective current collection component, for example in opposite edge surfaces extending away from the edge surface of the respective current collection component coupled to the insulating spacer (e.g., away from the intermediate connection portion and/or in a direction away from the other current collection component).

The pair of cutouts in the respective current collection component may be aligned with each other or displaced with respect to each other in a direction from the first current collection component to the second current collection component (e.g., be arranged at a same distance or at different distances from the edge surface of the respective current collection component coupled to the insulating spacer). The pair of cutouts may partially or completely overlap (e.g., be congruent with each other) along the direction from the first current collection component to the second current collection component. In other examples, the pair of cutouts may not overlap along the direction from the first current collection component to the second current collection component, e.g., be displaced with respect to each other so as separated by a non-zero distance along the direction from the first current collection component to the second current collection component.

Put differently, the first cutout and the second cutout may be formed in different columns.

The current collector may comprise fastening means for fastening (e.g., mounting and/or attaching) the current collector to an electrode assembly (e.g., an upper surface or portion thereof), e.g., so as to hold the current collector in place relative to (e.g., on) the electrode assembly. The electrode assembly may in particular be an electrode assembly of the secondary battery. The fastening means may for example comprise one or more projections (which may, e.g., be embodied as clamps, clips, pins, posts, rods, cantilevers, flaps, or the like or combinations thereof) on the insulating spacer for fitting (e.g., press-fitting) and/or clamping (e.g., clipping) the insulating spacer onto the electrode assembly. In one example, some or all of the projection(s) may be embodied as a corner guard, which may, e.g., be to extend around (and optionally press) a corner and/or an edge of the electrode assembly. The projection(s) may for example project downward (e.g., away from the upper surface/the connection terminals) from a lower surface and/or edge surface(s) of the insulating spacer. The projection(s) may for example be arranged in (e.g. project from) the intermediate connection portion and/or (preferably) the first wing portion and/or the second wing portion. The projection(s) may for example be in one or more corner portions of the insulating spacer (e.g., at and/or adjacent to corners, in particular opposite corners, of the insulating spacer).

Put differently, the current collector may further include a fastening portion provided to fasten the insulating connector to an upper surface of an electrode assembly.

The current collector may comprise a leakage blocking portion on and/or in the insulating spacer (e.g., on and/or in an upper surface thereof). The leakage blocking portion may be configured to block (e.g., prevent passage of and/or provide a seal for) an electrolyte (in particular a liquid electrolyte) while allowing for air (and/or other gases) to pass through the leakage blocking portion. The leakage blocking portion may comprise a wall, in particular a sidewall protruding from the insulating spacer (e.g., an upper surface thereof). The wall (e.g., the sidewall) may have a plurality of pores formed in the wall of the leakage blocking portion. The pores may be configured to block the electrolyte while allowing for air to pass through the pores (e.g., by choosing a size of the pores accordingly). The leakage blocking portion may for example be arranged on and/or in the intermediate connection portion (e.g., the upper surface thereof). The leakage blocking portion may be arranged at or adjacent to a vent structure (e.g., a (closed) vent hole) of the secondary battery, e.g., so as to surround and/or cover the vent structure.

Put differently, in some examples, a leakage blocking portion may be coupled to an upper surface of the intermediate connection portion. A plurality of pores may be formed in a sidewall of the leakage blocking portion.

In some examples, the leakage blocking portion may have an opening (e.g., be open) in a direction facing away from the insulating spacer (e.g., toward the vent structure). The sidewall may surround the opening, for example the leakage blocking portion may be formed by (e.g., consist of) the sidewall, which may, e.g., surround an internal space without any additional wall or cover on top of the sidewall.

In some examples, the sidewall may be configured enclose an internal space in conjunction with the insulating spacer (e.g., the upper surface thereof) and the vent structure (e.g., a lower surface thereof), for example such that the insulating spacer forms a bottom boundary (e.g. wall) of the internal space, the vent structure an upper boundary (e.g., wall) of the internal space and the sidewall of the leakage blocking portion a lateral or side boundary (e.g., wall) of the internal space.

One or both edge surfaces (side surfaces) of the insulating spacer (e.g., one or both edge surfaces of the intermediate connection portion) extending between the first and second current collection components may be beveled. The respective edge surfaces be inclined (e.g., at a non-zero angle other than 90°) with respect to the upper surface of the insulating spacer (e.g., of the intermediate connection portion), for example be at obtuse angle (> 90°) to the upper surface, e.g., at an angle of between 100° and 170°, in some examples between 110° and 150°, in some examples between 120° and 140°.

Put differently, a width-direction side surface of the intermediate connection portion may have an inclined cross-section.

A secondary battery according to an embodiment of the present invention may include a casing; an electrode assembly accommodated or to be accommodated in the casing, the electrode assembly including a first electrode and a second electrode and, optionally, a separator; a first electrode tab coupled to the first electrode; a second electrode tab coupled to the second electrode; and a current collector according to any one of the embodiments described herein. The first current collection component of the current collector may be coupled or to be coupled to the first electrode tab. The second current collection component of the current collector may be coupled or to be coupled to the second electrode tab. The secondary battery may further comprise a first terminal and a second terminal respectively connected or to be connected to the first connection terminal and the second connection terminal.

In some examples, the secondary battery may comprise a cap assembly that seals or is to seal the casing and includes the first and second terminals.

Put differently, a secondary battery according to an embodiment of the present disclosure may include: a casing; an electrode assembly accommodated in the casing, the electrode assembly including a first electrode, a separator, and a second electrode; a first electrode tab coupled to the first electrode; a second electrode tab coupled to the second electrode; a current collector including a first current collection component coupled to the first electrode tab and provided with a first connection terminal, a second current collection component coupled to the second electrode tab and provided with a second connection terminal, and an insulating connector (e.g., insulating spacer as described above) coupled to a side surface (edge surface) of the first current collection component and a side surface (edge surface) of the second current collection component, the insulating connector connecting the first current collection component and the second current collection component that are spaced apart from each other; and a cap assembly sealing the casing and including a first terminal and a second terminal positioned to be respectively connected to the first connection terminal and the second connection terminal.

In any of the above, the secondary battery may be a can-type secondary battery, in particular a prismatic secondary battery. The secondary battery may be in a partially or fully assembled state (e.g., with the electrode assembly accommodated in the casing, the first current collection component coupled to the first electrode tab, the second current collection component coupled to the second electrode tab, the first terminal connected to the first connection terminal and/or the second terminal connected to the second connection terminal). In other examples, the secondary battery may not be assembled yet, i.e., some or all of the components may be provided as separate parts and/or assemblies.

The casing is not particularly limited and may be embodied in various ways, e.g., as known in the art. The casing may be a housing of the secondary battery or form part of the housing of the secondary battery (e.g., may form the housing together with the cap assembly, e.g., the cap plate thereof). The casing (which may also be referred to as case herein) and/or the housing may be made of (e.g., comprise or consist of) a rigid material, in particular a metal material.

The casing and/or housing may have a prismatic shape (i.e., have, at least substantially, the shape of a prism), in particular a quadrilateral (quadrangular) prismatic (e.g., parallelepiped) shape such as a rectangular prismatic shape (i.e., have, at least substantially, the shape of a rectangular cuboid). Alternatively, the casing and/or the housing may, e.g., have a cylindrical shape.

The casing may have an opening, e.g., for inserting the electrode assembly into the casing. The opening may be formed at at least one side (e.g., surface) of the casing (which may be referred to as the top side or surface of the casing). In some examples, the opening may extend over the entire side (e.g., the entire top or top surface) of the casing.

The electrode assembly is not particularly limited and may be embodied in various ways, e.g., as is known in the art. The first and second electrodes may be of opposite polarity. The first electrode (which may, e.g., be a positive electrode) may for example comprise one or more first electrode portions (e.g., electrode sheets or plates and/or portions of a same electrode sheet or plate). The second electrode (which may, e.g., be a negative electrode) may for example comprise one or more second electrode portions (e.g., electrode sheets or plates and/or portions of a same electrode sheet or plate). The first electrode and/or the second electrode (e.g., the electrode portions thereof) may for example be stacked and/or wound to form the electrode assembly, e.g., with one or more separators interposed therebetween.

The first and second electrode tabs are not particularly limited and may be embodied in various ways, e.g., as is known in the art. The first and second electrode tabs may serve to electrically contact the first and second electrode, respectively (e.g., via the current collector). One or both of the first and second electrode tabs may protrude from the respective electrode, e.g., in a direction towards the current collector and/or the cap assembly.

One or both of the first and second electrode tabs may each comprise a plurality of (e.g., film- or sheet-like) electrode tabs, which may for example be formed by uncoated portions of electrode portions of the respective electrode (e.g., be integrally formed with the electrode portions) and/or may be attached to electrode portions of the respective electrode (e.g., be provided as extra pieces separate from the electrode portions). Said plurality of electrode tabs may be joined (e.g., welded or otherwise attached) to each other to form the first and second electrode tab, respectively.

In some examples, one or both of the first and second electrode tabs may each comprise a pair of electrode tabs (which may, e.g., be embodied as described above for the first and second electrode tabs and may in particular each comprise a plurality of electrode tabs, i.e., may be formed by a first plurality and a second plurality of electrode tabs). The pair of electrode tabs (e.g., the first and second pluralities of electrode tabs) may be arranged (or to be arranged) on opposite sides (e.g., at opposite edge surfaces) of the current collector.

The first electrode tab and/or the second electrode tab may be coupled (or to be coupled) to a lower surface and/or (preferably) an upper surface of the current collector (e.g., of the respective current collection component), for example as detailed below. The first electrode tab and/or the second electrode tab may for example be coupled (or to be coupled) to the current collector by welding or may be otherwise attached and/or electrically connected. The first electrode tab and/or the second electrode tab may be in direct contact with the respective current collection component, e.g., with no other elements arranged therebetween. One or both of the first and second electrode tabs may be displaced with respect to the connection terminal of the respective current collection component in a direction from the first current collection component to the second current collection component, e.g., such that the respective electrode tab does not overlap with the respective connection terminal along the direction from the first current collection component to the second current collection component.

The first and second terminals of the secondary battery are not particularly limited and may be embodied in various ways, e.g., as is known in the art. The first and second terminals may be external terminals of the secondary battery, which may, e.g., be used for connecting to the secondary battery (e.g., the electrode assembly) from the outside (in contrast to the first and second connection terminals, which provide internal connections within the secondary battery, namely from the respective terminal of the secondary battery to the respective current collection component). One or both of the first and second terminals may comprise a receptacle for receiving the respective connection terminal, wherein the receptacle may, e.g., be embodied as a hole, a recess and/or a cutout in the respective terminal. As mentioned above, the secondary battery may comprise a cap assembly that seals or is to seal the casing (e.g., the aforementioned opening thereof) and includes the first and second terminals. The cap assembly may further comprise a cap plate. The cap plate may cover (or be to cover) and, optionally, seal (e.g., in combination with one or more sealing members such as gaskets) the opening of the casing. The cap plate may be made of a material as described above for the casing, in some examples of a same material as the casing. The cap plate may for example be a quadrilateral or rectangular cap plate (e.g., in case of a prismatic secondary battery) or an elliptical or circular cap plate (e.g., in case of a cylindrical battery).

The cap plate may be formed with a first terminal hole into which the first connection terminal is inserted or is to be inserted, and/or a second terminal hole into which the second connection terminal is inserted or is to be inserted. One or both of the first and second terminal holes may for example be aligned with (e.g., overlap or be congruent with) the receptacle of the first and second terminal, respectively. The respective connection terminal may extend from the respective current collection component through the respective terminal hole to the respective terminal (e.g., into the receptacle thereof).

The insulating spacer may connect the first and second current collection components so as to be spaced apart from each other by a constant distance (e.g., maintain and/or hold the first and second current collection components at the constant distance) that is identical to (equal to) a distance between the first terminal hole and the second terminal hole. Thereby, the insulating spacer may facilitate insertion of the first and second connection terminals into the respective terminal holes (e.g., during assembly of the secondary battery) and/or maintaining the first and second connection terminals in the respective terminal holes (e.g., during use of the battery and/or later assembly stages).

Put differently, the cap assembly may include a cap plate formed with a first terminal hole into which the first connection terminal is inserted, and a second terminal hole into which the second connection terminal is inserted. A distance between the first terminal hole and the second terminal hole may be identical to a distance between the first connection terminal and the second connection terminal.

One or both of the first electrode tab and the second electrode tab may be coupled (or to be coupled) to a surface (which may also be referred to as a coupling surface) of the first and second current collection component, respectively. The coupling surface may face away from the electrode assembly and/or may be an upper surface of the respective current collection component on which the respective connection terminal is provided.

Put differently, the first electrode tab may be coupled to an upper surface of the first current collection component.

One or both of the first electrode tab and the second electrode tab may comprise a pair of electrode tabs (one or both of which may, e.g., comprise a plurality of (e.g., sheet- or film-like) electrode tabs, for example as described above). The pair of electrode tabs may for example be bent around opposite edge surfaces of the first and second current collection component, respectively, onto the coupling surface (e.g., the upper surface) of the first and second current collection component, respectively. The opposite edges surface may, e.g., be edge surfaces extending in a direction away from the other current collection component. One or both of the edge surfaces may comprise a cutout (e.g., as described above), in which the respective electrode tab may be arranged.

A method of manufacturing a current collector for a secondary battery according to an embodiment of the present disclosure may include preparing the first current collection component and the second current collection component (which may be referred to as a preparation operation), and connecting the first current collection component and the second current collection component by the insulating spacer or connector (which may be referred to as a coupling operation).

The current collector may be a current collector according to any one of the embodiments described herein. The preparation operation may comprise manufacturing (e.g., forming) one or both of the first and second current collection components. In other examples, one or both of the first and second current collection components may be received as pre-formed entities (e.g., parts or assemblies), which may have been manufacture prior to execution of the method according to the present disclosure.

The coupling operation may comprise coupling the insulating spacer to the first and second current collection components, in particular to an edge surface thereof (e.g., as described above). Said coupling may comprising a bringing in contact and/or attaching. This may for example comprise arranging (e.g., placing) the first and second current collection components on the insulating spacer (e.g., the first and second wing portion, respectively, thereof) and bringing the edge surface of the first and second current collection components in contact with the insulating spacer (e.g., an edge surface of the intermediate connection portion). The coupling operation may comprise manufacturing (e.g., forming) the insulating spacer, e.g., by molding and in particular injection molding. In other example, the insulating spacer may be received as a preformed entity.

The coupling operation may include coupling the first current collection component and the second current collection component to the insulating connector/spacer by an adhesive.

Additionally or alternatively, the coupling operation may include coupling the first current collection component and the second current collection component to the insulating connector by injection molding the insulating connector/spacer (e.g., onto the first and second current collection components).

The method may further comprise inserting the first connection terminal into a first terminal hole of a cap plate (or cap assembly) for (e.g., of) a secondary battery (e.g., as described above) and/or inserting the second connection terminal into a second terminal hole of the cap plate (or cap assembly). Additionally or alternatively, the method may further comprise connecting one or both of the first and second connection terminals to a first and second terminal, respectively, for (e.g., of) a secondary battery.

### BRIEF DESCRIPTION OF THE DRAWINGS

The following drawings attached to this specification illustrate preferred embodiments of the present disclosure, and help to further understand the technical spirit of the present disclosure along with the aforementioned contents of the disclosure. Accordingly, the present disclosure should not be construed as being limited to only contents described in such drawings.
FIG. 1 is a perspective view illustrating a secondary battery according to a first embodiment of the present disclosure.
FIG. 2 is a perspective view illustrating a partially exploded configuration of the secondary battery of FIG. 1.
FIG. 3 is a perspective view of a current collector for secondary batteries.
FIG. 4 is a perspective view illustrating the current collector for secondary batteries and a cap assembly together.
FIG. 5 is a front view illustrating the current collector for secondary batteries.
FIGS. 6A-C illustrate cross-sections of modified examples of an intermediate connection portion.
FIG. 7A is a top view illustrating a first current collection component and a first wing portion.
FIG. 7B is a front view illustrating the first current collection component and the first wing portion.
FIG. 8 is a perspective view illustrating electrode tabs that are coupled to the current collector for secondary batteries.
FIGS. 9A to 11B illustrate modified examples of the first wing portion.
FIG. 12 is a perspective view illustrating a current collector of a secondary battery according to a second embodiment of the present disclosure.
FIG. 13 is a top view of the current collector of FIG. 12.
FIG. 14 illustrates a modified example of a first current collection component of FIG. 13.
FIG. 15 is a perspective view illustrating a current collector of secondary batteries according to a third embodiment of the present disclosure.
FIG. 16 is a top view illustrating the current collector for secondary batteries of FIG. 15.
FIGS. 17A-C illustrate modified examples of a fastening rod of FIG. 16.
FIG. 18 is a perspective view illustrating a current collector of a secondary battery according to a fourth embodiment of the present disclosure.
FIG. 19 is a perspective view illustrating a current collector of a secondary battery according to a fifth embodiment of the present disclosure.
FIG. 20 is a perspective view illustrating a current collector of a secondary battery according to a sixth embodiment of the present disclosure.
FIG. 21 is a side view of the current collector of FIG. 20.
FIG. 22 is a flowchart illustrating a method of manufacturing a current collector provided in a secondary battery according to a seventh embodiment of the present disclosure.
FIG. 23 is a perspective view for explaining a coupling operation of FIG. 22.
FIG. 24 is a flowchart illustrating a modified example of the coupling operation of FIG. 22.
FIG. 25 is a perspective view illustrating a battery module including the secondary battery of FIG. 1.
FIG. 26 is a perspective view illustrating a battery pack including the battery module of FIG. 25.

### DETAILED DESCRIPTION

Since the present disclosure may be modified in various forms, and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

For ease of description, various features and elements of the present disclosure may be disclosed in combination in the embodiments described below. Unless mentioned otherwise, this does, however, not imply any functional or structural link between the respective features and elements. Each individual one of the features and elements (and each combination of features and elements) described below may also be present in the current collector, the secondary battery and/or the method according to the present disclosure in isolation and separate from the other features and elements of the respective embodiment. This applies in particular to the current collector, which may also be provided individually, i.e., not as part of an (e.g., assembled) secondary battery but as a separate part (e.g., separate from the other components of the secondary battery).

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "comprise", "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

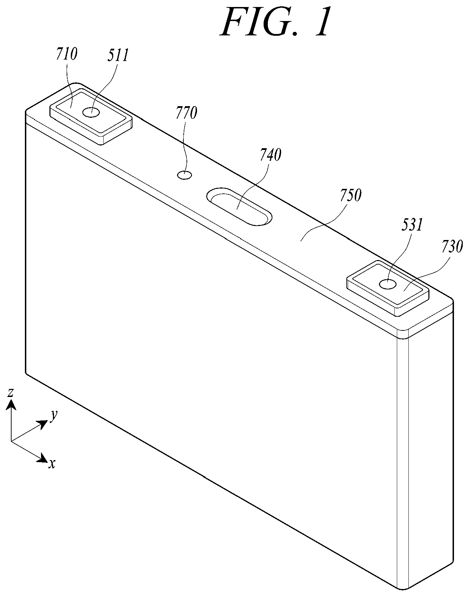

In the present specification, the term "longitudinal direction" may refer to (e.g., be parallel to or coincide with) an x-axis direction in FIG. 1, the term "width direction" may refer to (e.g., be parallel to or coincide with) a y-axis direction in FIG. 1, and the term "height direction" may refer to (e.g., be parallel to or coincide with) a z-axis direction in FIG. 1.

As used herein, a side or surface of the secondary battery at (or adjacent to) which the current collector is arranged (which may, e.g., coincide with the side at which some or all of the cap plate or cap assembly, one or more terminals and/or an opening of the casing for inserting the electrode assembly is/are arranged) may be referred to as an upper (or top) side or surface of the secondary battery (without, however, intending to define any particular orientation of the current collector and/or battery with respect to the direction of gravity and/or other entities such as a device in which the battery is used). The opposite side or surface of the secondary battery may accordingly be referred to as lower (or bottom) side or surface. Spatially relative terms (such as upper, top, lower, bottom, above or below) with respect to the secondary battery and/or is components may be used in this sense.

The height direction may be a direction from the lower side of the secondary battery to the upper side. The width direction may be a minor axis or direction of smallest extent of the secondary battery (e.g., of the casing of the secondary battery), for example in a plane perpendicular to the height direction. The longitudinal direction may be a direction perpendicular to the height and width directions and/or may be a major axis or a direction of largest extent of the secondary battery (e.g., of the casing of the secondary battery) in a plane perpendicular to the height direction.

A direction from the first current collection component to the second current collection component (or vice-versa) as referred to herein, a direction from the first wing portion to the second wing portion (or vice-versa) as referred to herein and/or a direction away from the intermediate connection portion as referred to herein may coincide with the longitudinal direction in some examples.

Hereinafter, embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements may be enlarged, omitted, or depicted schematically.

Hereinafter, a current collector and a secondary battery according to a first embodiment of the present disclosure will be described.

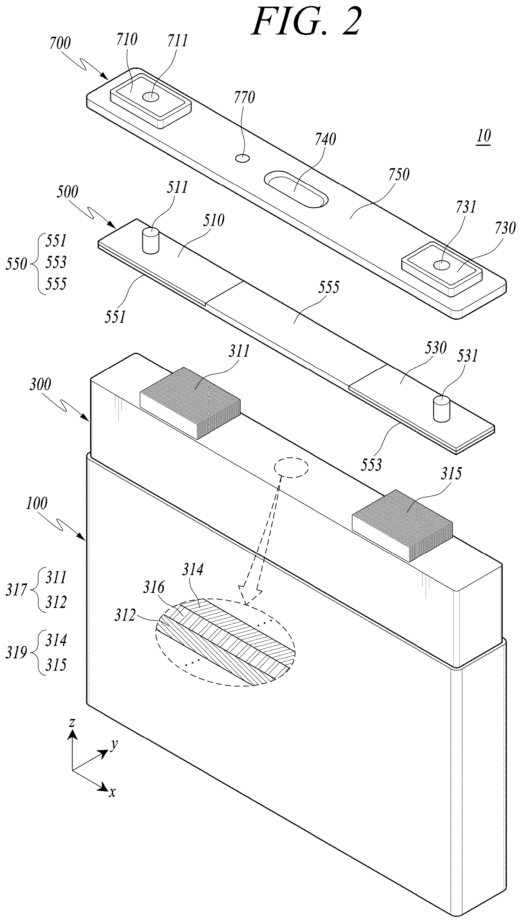

FIG. 1 is a perspective view illustrating the secondary battery according to the first embodiment of the present disclosure. FIG. 2 is a perspective view illustrating a partially exploded configuration of the secondary battery of FIG. 1.

Referring to FIGS. 1 and 2, the secondary battery 10 according to the first embodiment of the present disclosure includes an electrode assembly 300 in which a separator 316 is interposed between a first electrode 317 and a second electrode 319. The secondary battery further includes a current collector 500 for secondary batteries (e.g., for use in a secondary battery) that is electrically connected to the electrode assembly 300. The secondary battery further includes a casing 100 that accommodates the electrode assembly 300 therein, and a cap assembly 700 that seals the casing 100.

The electrode assembly 300 may be formed in such a way that the separator 316 is interposed between the first electrode 317 and the second electrode 319 that are alternately arranged (e.g., alternately stacked). In other words, the electrode assembly 300 may be formed by arranging the separator 316 located between the first electrode 317 and the second electrode 319 and alternately stacking the first electrode 317, the separator 316, the second electrode 319, and, optionally, the separator 316 in the listed order. The first electrode 317 and the second electrode 319 may be a positive electrode and a negative electrode, respectively, or, conversely, the first electrode 317 and the second electrode 319 may be a negative electrode and a positive electrode, respectively, as electrodes having opposite polarities.

Each of the first electrode 317 and the second electrode 319 may include an active electrode portion 312 or 314, which may be a region where an active material is applied to a thin plate or sheet (e.g., formed of a metal foil). Each of the first electrode 317 and the second electrode 319 may further include an electrode tab 311 or 315, which may be a region where no active material is applied.

The first active electrode portion 312 may be formed by applying an active material such as a transition metal oxide to a metal foil such as aluminum. The second active electrode portion 314 may be formed by applying an active material such as graphite or carbon to a metal foil such as copper or nickel.

The first electrode tab 311 may protrude from one side (e.g., an upper side) of the first active electrode portion 312. The second electrode tab 315 may protrude from one side (e.g., an upper side) of the second active electrode portion 314. Here, the first electrode tab 311 and the second electrode tab 315 may protrude parallel toward the cap assembly 700. Alternatively, the first electrode tab 311 and the second electrode tab 315 may protrude in different directions.

Each of the first electrode tab 311 and the second electrode tab 315 is formed by cutting to protrude from the corresponding metal foil. Hence, the first electrode tab 311 and the second electrode tab 315 may be integrally formed with the metal foils of the first active electrode portion 312 and the second active electrode portion 314, respectively.

The first electrode tab 311 and the second electrode tab 315 may have different polarities. The first electrode tab 311 and the second electrode tab 315 may be spaced apart from each other by a distance (e.g., in the longitudinal direction / along the x-axis).

Each of the first electrode tab 311 and the second electrode tab 315 may be formed by stacking a plurality of thin films. The thin films may be connected to be in contact with each other by ultrasonic welding, laser welding, or the like, in order to facilitate movement of current.

The separator 316 is positioned between the first electrode 317 and the second electrode 319, and more specifically, between the first active electrode portion 312 and the second active electrode portion 314, thereby preventing a short circuit therebetween and allowing movement of ions. For example, the separator 316 may be formed of any of various materials such as polyethylene, polypropylene, or a composite film thereof.

In the present embodiment, the electrode assembly 300 may be formed by winding the first electrode 317 and the second electrode 319 (wound type), or may be formed by overlapping the first electrode 317 and the second electrode 319 parallel with each other (stacked type), for example by alternatingly arranging (e.g., stacking) first electrode portions (e.g., sheets or plates) and second electrode portions (e.g., sheets or plates), wherein the first electrode portions may collectively form the first electrode 317 and the second electrode portions may collectively form the second electrode 319.

The current collector 500 for secondary batteries may include a first current collection component 510, a second current collection component 530, and an insulating spacer (which is also referred to as insulating connector herein) 550.

The first current collection component 510 may electrically connect a first terminal 710, which is exposed to the outside of the cap assembly 700, to the first electrode tab 311. The second current collection component 530 may electrically connect a second terminal 730, which is exposed to the outside of the cap assembly 700, to the second electrode tab 315.

One side (e.g., an upper or lower side) of the first current collection component 510 may be connected to the first electrode tab 311. Another side or a same side (e.g., the upper side) of the first current collection component 510 may be connected to the first terminal 710.

Specifically, the first current collection component 510 may be indirectly connected to the first terminal 710 through a first connection terminal 511 or the like (which may be arranged on the upper side of the first current collection component 510 as illustrated in FIG. 2, e.g., facing away from the electrode assembly 300).

One side (e.g., an upper or lower side) of the second current collection component 530 may be connected to the second electrode tab 315. Another side or a same side (e.g., an upper side) of the second current collection component 530 may be connected to the second terminal 730.

Similarly to the first current collection component 510, the second current collection component 530 may also be indirectly connected to the second terminal 730 through a second connection terminal 531 or the like (which may be arranged on the upper side of the second current collection component 530 as illustrated in FIG. 2, e.g., facing away from the electrode assembly 300).

A detailed structure of the current collector 500 for secondary batteries and respective detailed coupling structures of the first electrode tab 311 and the second electrode tab 315 will be described below.

The cap assembly 700 may seal an opening of the casing 100 in which the electrode assembly 300 is accommodated. The cap assembly 700 may include a cap plate 750, the first terminal 710, and the second terminal 730.

The cap plate 750 may have a plate shape that covers the opening of the casing 100. The cap plate 750 may have a shape corresponding to that of the opening of the casing 100. The cap plate 750 may be formed of the same material as the casing 100, and may be fixed to the casing 100, e.g., by welding such as laser welding.

The cap plate 750 may be formed with a first terminal hole 711 into which the first connection terminal 511 is inserted and a second terminal hole 731 into which the second connection terminal 531 is inserted. Optionally, the cap plate may be formed with one or both of an electrolyte injection hole 770 that is used for injection of electrolyte and a vent hole 740 that, e.g., may open when an internal pressure of the casing 100 exceeds a preset pressure value. However, the position of the vent hole 740 and/or the electrolyte injection hole 770 is not necessarily limited thereto, and one or both of the vent hole 740 and the electrolyte injection hole 770 may be formed in one or more sides of the casing 100, for example, in a side surface and/or a bottom surface of the casing 100.

The first terminal 710 and the second terminal 730 may be formed to protrude from the cap plate 750. The first terminal 710 may be electrically connected to the first electrode 317 through the first current collection component 510. The second terminal 730 may be electrically connected to the second electrode 319 through the second current collection component 530. Here, the first terminal 710 may be electrically connected to the first current collection component 510 through the first connection terminal 511. The second terminal 730 may also be electrically connected to the second current collection component 530 through the second connection terminal 531.

Each of the first terminal 710 and the second terminal 730 may be provided in the form of a plate having, for example, a circular shape or a rectangular shape. One or both of the first terminal 710 and the second terminal 730 may be connected to a bus bar or the like.

A first insulator (not illustrated) may be disposed between the first terminal 710 and the cap plate 750 to insulate the first terminal 710 and the cap plate 750 from each other. In addition, a second insulator (not illustrated) may be disposed between the second terminal 730 and the cap plate 750 to insulate the second terminal 730 and the cap plate 750 from each other.

The first connection terminal 511 may have a post shape. The first connection terminal 511 may be inserted into the first terminal hole 711 to electrically connect the first terminal 710 to the first current collection component 510. Similarly to the first connection terminal 511, the second connection terminal 531 may have a post shape. The second connection terminal 531 may be inserted into the second terminal hole 731 to electrically connect the second terminal 730 to the second current collection component 530.

The casing 100 may form an external shape of the secondary battery 10. The casing 100 may define therein a space to accommodate the electrode assembly 300, e.g., with the opening formed in one surface of the casing 100. The casing 100 may have a prismatic shape such as a rectangular parallelepiped shape. The casing 100 may be formed of a rigid material capable of protecting the electrode assembly 300 accommodated therein. For example, the casing 100 may be formed of a metal such as aluminum or stainless steel.

Electrolyte may be received (e.g., accommodated) together with the electrode assembly 300 in the casing 100. The electrolyte may include a lithium salt such as LiPF₆ or LiBF₄ in an organic solvent such as ethylene carbonate (EC), propylene carbonate (PC), diethyl carbonate (DEC), ethyl methyl carbonate (EMC), or dimethyl carbonate (DMC). The electrolyte may be in a liquid, solid, or gel phase.

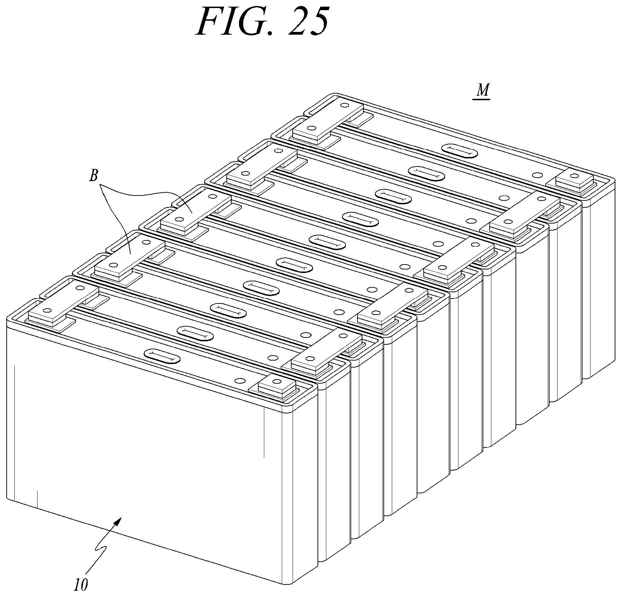

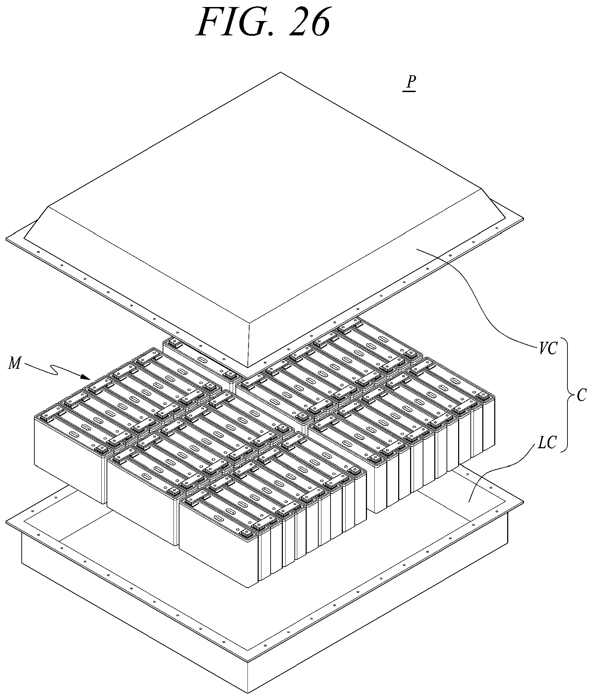

In an aspect, a battery module M may be configured to include a plurality of secondary batteries 10 according to the present embodiment (see FIG. 25). The plurality of secondary batteries 10 (e.g., the terminals thereof) may be connected to each other by a bus bar B or the like to constitute the battery module M. Furthermore, a battery pack P may be configured to include a plurality of battery modules M (see FIG. 26). The battery pack P may be configured by arranging the plurality of battery modules M in an upper pack housing VC and a lower pack housing LC that form a pack housing C. In addition, the battery pack P may be provided to a transportation unit that transports cargo, people, or performs tasks while moving. Such transportation units may include bicycles, heavy equipment, agricultural and fishery machinery, automobiles, buses, airplanes, and the like. Here, the automobiles may include an electric vehicle, a hybrid electric vehicle, or a plug-in hybrid electric vehicle. The automobiles may include four-wheeled or two-wheeled types. The transportation units may operate using power received from the battery pack P.

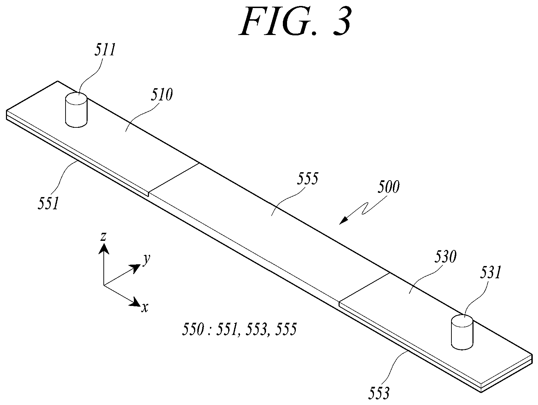

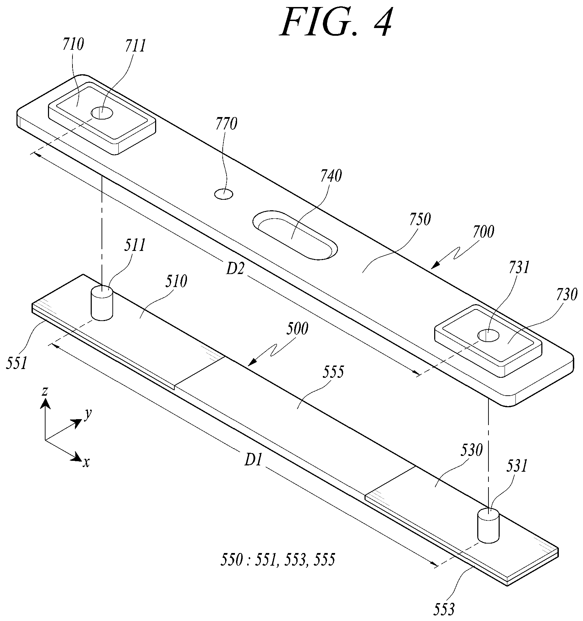

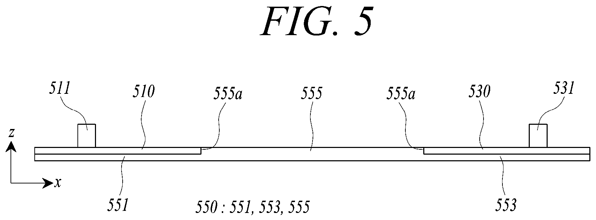

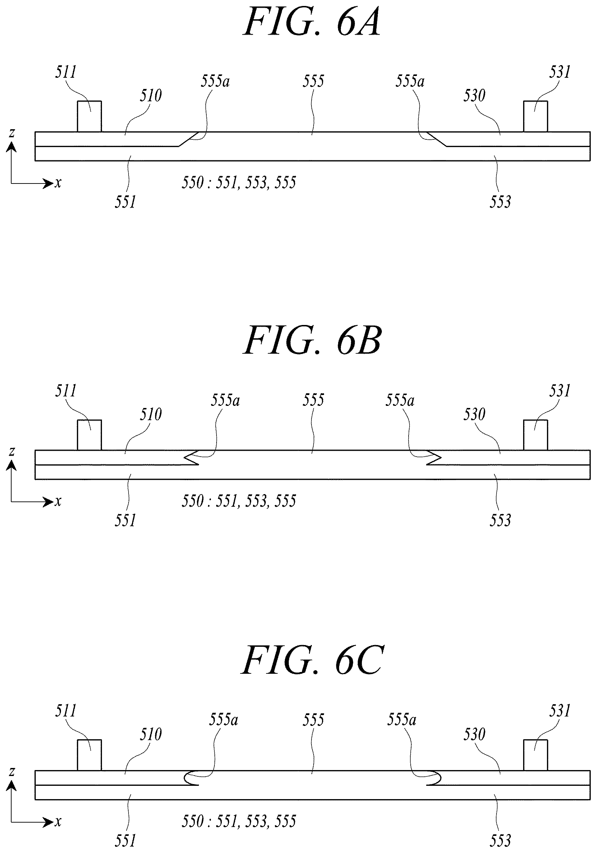

FIG. 3 is a perspective view of the current collector for secondary batteries (e.g., for use in a secondary battery). FIG. 4 is a perspective view illustrating the current collector for secondary batteries and the cap assembly together. FIG. 5 is a front view illustrating the current collector for secondary batteries. FIGS. 6A-C illustrate cross-sections of modified examples of an intermediate connection portion.

Referring to FIGS. 3 and 4, the current collector 500 for secondary batteries includes the first current collection component 510, the second current collection component 530, and the insulating spacer/connector 550.

The insulating connector 550 is coupled to an edge surface (also referred to as side surface) of the first current collection component 510 and an edge surface (also referred to as side surface) of the second current collection component 530. Specifically, the insulating connector 550 may be positioned between respective side surfaces of the first current collection component 510 and the second current collection component 530 that face each other, and may be coupled to each of the facing side surfaces. The coupled insulating connector 550 connects the first current collection component 510 and the second current collection component 530, which are spaced apart from each other in the longitudinal direction (x-axis direction). The current collector 500 for secondary batteries, in which the first current collection component 510, the second current collection component 530, and the insulating connector 550 are connected to each other, may be coupled to the cap assembly 700 as an integrated component.

Each of the first current collection component 510 and the second current collection component 530 may have a substantially plate-shaped structure (which may form or be referred to as a base of the respective current collection component). Each of the first current collection component 510 and the second current collection component 530 may be made of a conductive metal.

The first connection terminal 511 and the second connection terminal 531 are respectively coupled to (e.g., attached to or integrally formed with) upper surfaces of the first current collection component 510 and the second current collection component 530.

Each of the first connection terminal 511 and the second connection terminal 531 may have a post shape extending in a direction toward the cap assembly 700 (see FIG. 2), e.g., in the height direction. Each of the first connection terminal 511 and the second connection terminal 531 may be made of a metal material that is the same as that of the corresponding one of the first current collection component 510 and the second current collection component 530. The first connection terminal 511 and the second connection terminal 531 may be integrally formed with the first current collection component 510 and the second current collection component 530, respectively, or may be separately manufactured and joined, e.g., by welding.

The first current collection component 510 and the second current collection component 530 are spaced apart from each other in the longitudinal direction (x-axis direction). The first current collection component 510 and second current collection component 530 that are spaced apart from each other are connected by the insulating connector 550.

The insulating connector 550 is coupled to the side surface of the first current collection component 510 and the side surface of the second current collection component 530, and more specifically, to the side surfaces of the first current collection component 510 and the second current collection component 530 that face each other, thereby connecting the first current collection component 510 and second current collection component 530 that are spaced apart from each other. The insulating connector 550 may be connected to the first current collection component 510 and the second current collection component 530 so that the current collector 500 for secondary batteries may have an integrated structure (e.g., form a same part or component) .

An upper surface of the current collector 500 for secondary batteries may have a flat shape (e.g., be level). In other words, except for the connection terminals 511 and 531, the upper surfaces of the first current collection component 510, the second current collection component 530, and the insulating connector 550 may be connected in a flat shape without a stepped portion (e.g., so as to be at a same level or height).

Due to the aforementioned structure, a vacant space between the current collector 500 for secondary batteries and the cap plate 750 may be reduced, thereby making it possible to enhance the energy density of the secondary battery 10.

In the present embodiment, because the first current collection component 510 and the second current collection component 530 are connected to each other by the insulating connector 550, a distance D1 between the first connection terminal 511 and the second connection terminal 531 is constant. Here, the distance D1 between the first connection terminal 511 and the second connection terminal 531 may be equal to a distance D2 between the first terminal hole 711 and the second terminal hole 731.

In this case, even if only the first connection terminal 511 is aligned with the position of the first terminal hole 711, the second connection terminal 531 is also aligned with the position of the second terminal hole 731. As a result, there is no occurrence of deviation in the position of the second connection terminal 531, thereby improving the assemblability of the secondary battery 10.

Referring to FIG. 5, the insulating connector 550 may include an intermediate connection portion 555, a first wing portion 551, and a second wing portion 553. The insulating connector 550 may have a shape in which the first wing portion 551 is formed on one side of the intermediate connection portion 555 and the second wing portion 553 is formed on a remaining side of the intermediate connection portion 555, with the intermediate connection portion 555 positioned at the center.

The intermediate connection portion 555 may be located at the center of the insulating connector 550. The first current collection component 510 and the second current collection component 530 may be respectively coupled to opposite edge surfaces (side surfaces) 555a of the intermediate connection portion 555 in the longitudinal direction (x-axis direction). The intermediate connection portion 555 may be formed of an insulating material. Accordingly, the intermediate connection portion 555 may insulate the first current collection component 510 and the second current collection component 530 from each other to prevent a short circuit, while still connecting the first current collection component 510 and the second current collection component 530.

The opposite side surfaces 555a of the intermediate connection portion 555 that are in contact with the first current collection component 510 and the second current collection component 530 may have various cross-sectional shapes (e.g., in a plane spanned by the height and longitudinal directions).

For example, as illustrated in FIG. 5, one or both of the opposite side surfaces 555a of the intermediate connection portion 555 may have a cross-section perpendicular to (e.g., be perpendicular to) the upper surface of the intermediate connection portion 555. For example, the entire respective side surface 555a may be (e.g., extend) perpendicular to the upper surface of the intermediate connection portion 555, e.g., as illustrated in FIG. 5.

Alternatively, as illustrated in FIG. 6A, one or both of the opposite side surfaces 555a of the intermediate connection portion 555 may have an inclined cross-section (e.g., be inclined) with respect to the upper surface of the intermediate connection portion 555. For example, the entire respective side surface 555a may be inclined (e.g., extend at a non-zero angle other than 90°) to the upper surface of the intermediate connection portion 555, e.g., as illustrated in FIG. 6A. In other examples, one or both of the opposite side surfaces 555a of the intermediate connection portion 555 may have a wedge-shaped cross-sectional (e.g., as illustrated in FIG. 6B) or a curved cross-sectional shape (e.g., as illustrated in FIG. 6C). In this case, because the areas of the opposite side surfaces 555a of the intermediate connection portion 555 to which the first current collection component 510 and the second current collection component 530 may be coupled increase, coupling strength may be improved.

The first wing portion 551 may be formed on the one side of the intermediate connection portion 555 in the longitudinal direction (x-axis direction). The first wing portion 551 may be located under the first current collection component 510 (e.g., arranged on a lower surface of the first current collection component 510). The first wing portion 551 may be placed (e.g., extend) parallel to the first current collection component 510 on the one side of the intermediate connection portion 555 in the longitudinal direction (x-axis direction). Here, the first wing portion 551 may be integrally formed with the intermediate connection portion 555.

A thickness (height in the z-axis direction) of the first wing portion 551 may be smaller than a thickness (height in the z-axis direction) of the intermediate connection portion 555. The first wing portion 551 and the intermediate connection portion 555 may be formed of the same material, and may have insulating properties. Accordingly, the first wing portion 551 may insulate the first electrode tab 311 (see FIG. 2) and the first current collection component 510 from each other.

The second wing portion 553 may be formed on the remaining side of the intermediate connection portion 555 in the longitudinal direction (x-axis direction). The second wing portion 553 may be located under the second current collection component 530 (e.g., arranged on a lower surface of the second current collection component 510). The second wing portion 553 may be placed (e.g., extend) parallel to the second current collection component 530 on the remaining side of the intermediate connection portion 555 in the longitudinal direction (x-axis direction). Here, the second wing portion 553 may also be integrally formed with the intermediate connection portion 555.

A thickness (height in the z-axis direction) of the second wing portion 553 may be smaller than that of the intermediate connection portion 555, and may be equal to the thickness (height in the z-axis direction) of the first wing portion 551. The second wing portion 553 and the intermediate connection portion 555 may be formed of the same material, and may have insulating properties. Accordingly, the second wing portion 553 may insulate the second electrode tab 315 (see FIG. 2) and the second current collection component 530 from each other.

The insulating connector 550 may be provided such that the intermediate connection portion 555, the first wing portion 551, and the second wing portion 553 are integrally formed. For example, the insulating connector 550 may be integrally formed through injection molding to include the intermediate connection portion 555, the first wing portion 551, and the second wing portion 553. In this regard, a method of manufacturing the current collector 500 for secondary batteries, including the insulating connector 550, will be described with reference to a separate embodiment below.

A lower surface of the integrally formed insulating connector 550 (e.g., facing away from the connection terminals 511, 531 and/or towards the electrode assembly 300) may have a flat shape (e.g., be level). In other words, lower surfaces of the intermediate connection portion 555, the first wing portion 551, and the second wing portion 553 may be formed flat without a stepped portion (e.g., so as to be at a same level or height).

Because the intermediate connection portion 555 has a thickness (height in the z-axis direction) greater than that of the first wing portion 551 and the second wing portion 553 disposed on the opposite side surfaces 555a, the insulating connector 550 may have a shape (e.g., a podium shape) in which the intermediate connection portion 555 protrudes upward relative to the first wing portion 551 and the second wing portion 553. In other words, the insulating connector 550 may have a flat lower surface, and an upper surface having a shape in which the intermediate connection portion 555 protrudes (e.g., a stepped upper surface).

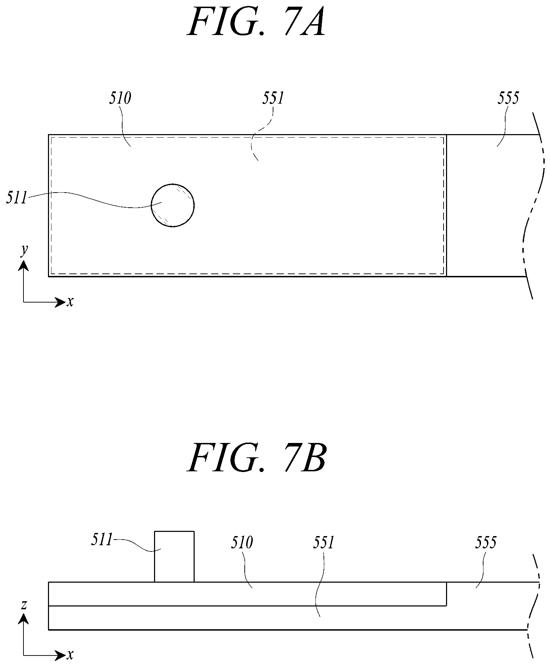

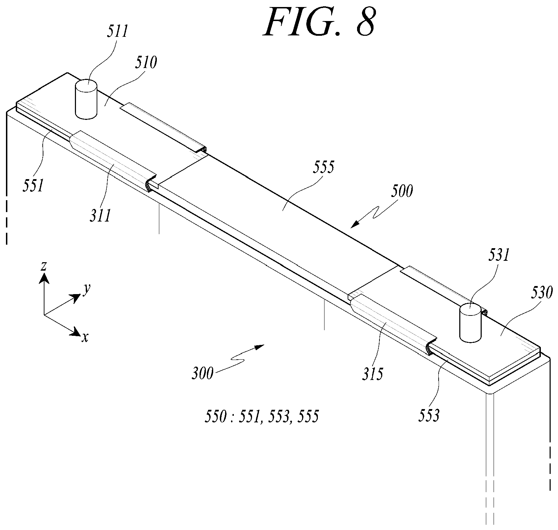

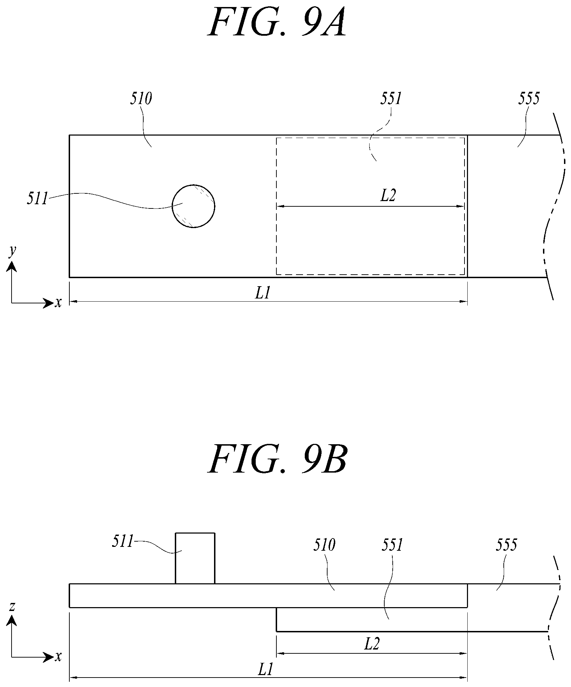

FIG. 7A is a top view illustrating the first current collection component and the first wing portion. FIG. 7B is a front view illustrating the first current collection component and the first wing portion. FIG. 8 is a perspective view illustrating the electrode tabs that are coupled to the current collector for secondary batteries. FIGS. 9A to 11B illustrate modified examples of the first wing portion. For convenience, in FIGS. 7A, 9A, 10, 11A and 11B, the first current collection component 510 is illustrated with a solid line, and the first wing portion 551 is illustrated with a dotted line.

The structure of the first wing portion 551 and the coupling relationship with the first electrode tab 311, which will be described below, may be equally applied to the second wing portion 553 and the second electrode tab 315. Therefore, redundant descriptions of the second wing portion 553 and the second electrode tab 315 will be omitted.

Referring to FIGS. 7A and 7B, a shape of the first wing portion 551 may correspond to that of the first current collection component 510. In other words, the first wing portion 551 located under the first current collection component 510 may be formed to have the same shape and the same size as (i.e., be congruent with) the first current collection component 510 (e.g., such that all of their edges/edge surfaces are respectively aligned with each other, e.g., when viewed along the height direction as in FIG. 7A).

For example, in the case where the first current collection component 510 has a rectangular shape, the first wing portion 551 located under the first current collection component 510 may also have a rectangular shape with the same area as the first current collection component 510.

If the size of the first wing portion 551 is greater than that of the first current collection component 510, a problem may arise in that it is difficult for the current collector 500 for secondary batteries to be accommodated in the casing 100 (see FIG. 2).

Furthermore, if the size of the first wing portion 551 is smaller than that of the first current collection component 510, there may be a problem in that the first electrode tab 311 (see FIG. 8) and the first current collection component 510 cannot be reliably insulated from each other.

If the first wing portion 551 is formed to have the same shape and the same size as the first current collection component 510, not only can the current collector 500 for secondary batteries be accommodated in the casing 100 (see FIG. 2), but the first wing portion 551 can also reliably insulate the first electrode tab 311 (see FIG. 8) from the first current collection component 510.

Because a lower portion of the first current collection component 510 is covered with the first wing portion 551, the first electrode tab 311 may be coupled to the upper surface of the first current collection component 510, e.g., the surface on which the first connection terminal 511 is provided and/or which faces away from the electrode assembly 300 as illustrated in FIG. 8.

Referring to FIG. 8, the first electrode tab 311 may bypass the first wing portion 551 in the width direction (y-axis direction) and be coupled to the upper surface of the first current collection component 510. The first electrode tab 311 may be coupled to the first current collection component 510 by welding. For example, laser welding, ultrasonic welding, or the like may be used for the welding.

The first wing portion 551 may be formed in various shapes, which may differ from the foregoing. Specifically, the first wing portion 551 may be formed to cover only a portion of (partially cover) the lower surface of the first current collection component 510.

For instance, referring to FIGS. 9A and 9B, a width of the first wing portion 551 (e.g., in the width direction and/or perpendicular to a direction from the first current collection component to the second current collection component) may be the same as that of the first current collection component 510, but a length L2 of the first wing portion 551 (e.g., in the longitudinal direction and/or in a direction from the first current collection component to the second current collection component) may be less than a length L1 of the first current collection component 510 (e.g., between 20% and 80%, in some examples between 30% and 70% of the length L1). Accordingly, the lower surface of the first current collection component 510 may be divided into a region covered with the first wing portion 551 and a region not covered with the first wing portion 551.

The region of the lower surface of the first current collection component 510 that is not covered with the first wing portion 551 may face the electrode assembly 300 (see FIG. 8) in an up-and-down direction (e.g. the height direction). In this case, the first electrode tab 311 (see FIG. 8) may be coupled to the lower surface of the first current collection component 510.

In the region of the lower surface of the first current collection component 510 that is covered with the first wing portion 551, the first electrode tab 311 (see FIG. 8) may bypass the first wing portion 551 and be coupled to the upper surface of the first current collection component 510.

For example, the first electrode tab 311 may include a pair of electrode tabs (e.g., similar as shown in FIG. 8), wherein a first one of said pair of electrode tab may be coupled to the upper surface of the first current collection component 510 and a second one of said pair of electrode tab may be coupled to the lower surface of the first current collection component 510.

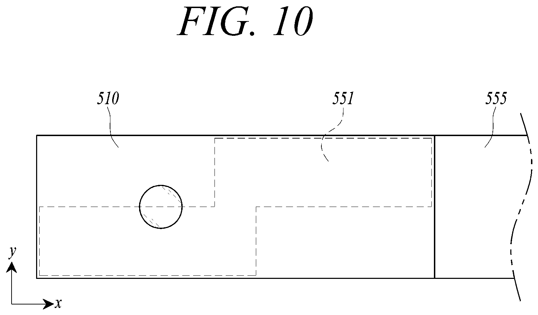

In another example, as illustrated in FIG. 10, the first wing portion 551 may cover the lower surface of the first current collection component 510 in a Z-shaped pattern (e.g., have a Z-like and/or S-like shape, for example as illustrated in FIG. 10). For this, a pair of cutouts may be formed in opposite edge surfaces of the first wing portion 551, e.g., as illustrated in FIG. 10.

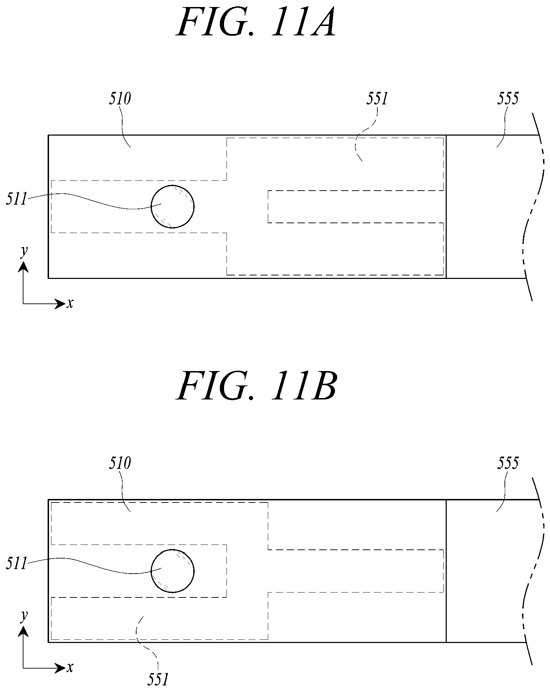

Alternatively, as illustrated in FIGS. 11A and 11B, the first wing portion 551 may cover a central portion in a longitudinal direction (x-axis direction) of one half region of the lower surface of the first current collection component 510, and opposite side portions in the width direction (y-axis direction) of the other half region (e.g., have a Y-like and/or fork-like shape, for example as illustrated in FIGS. 11A and 11B). For this, a pair of cutouts may be formed in opposite edge surfaces of the first wing portion 551 along with a third recess in a third edge surface of the first wing portion 551, e.g., as illustrated in FIGS. 11A and 11B.

In this case as well, partial regions of the lower surface of the first current collection component 510 that are not covered with the first wing portion 551 allow the first electrode tab 311 (see FIG. 8) to be coupled to the lower surface of the first current collection component 510. In a remaining region of the lower surface of the first current collection component 510 that is covered with the first wing portion 551, the first electrode tab 311 (see FIG. 8) may be coupled to the upper surface of the first current collection component 510.

Hereinafter, a current collector and a secondary battery according to a second embodiment of the present disclosure will be described.

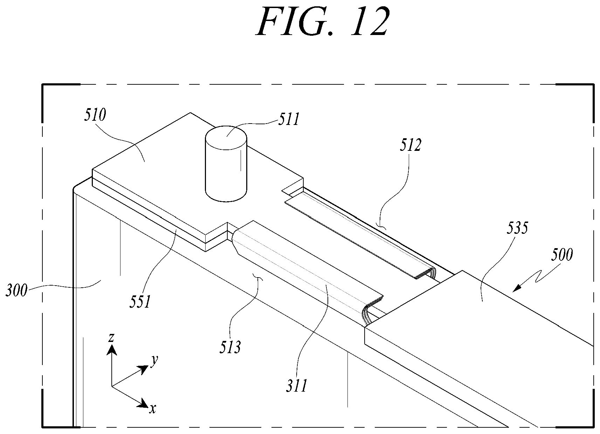

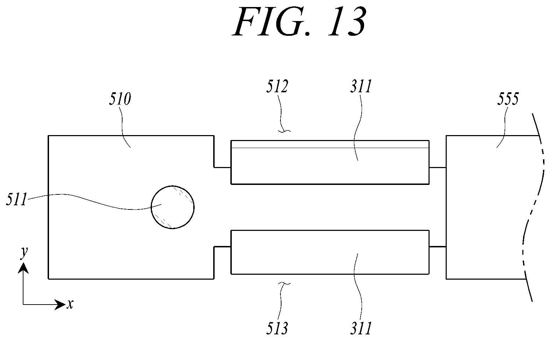

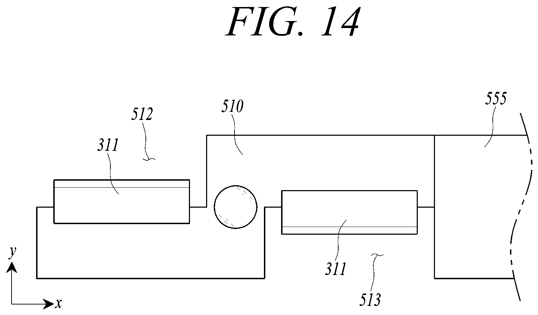

FIG. 12 is a perspective view illustrating a current collector of a secondary battery according to a second embodiment of the present disclosure. FIG. 13 is a top view of the current collector of FIG. 12. FIG. 14 illustrates a modified example of a first current collection component of FIG. 13.

A secondary battery according to the second embodiment of the present disclosure has the same structure as the secondary battery according to the first embodiment described above, except for a first current collection component 510 and a first wing portion 551. Therefore, a redundant description of the same configuration will be omitted. Furthermore, the structures of a second current collection component 530 and a second wing portion 553 are the same as those of the first current collection component 510 and the first wing portion 551; therefore, descriptions of the structures of the second current collection component 530 and the second wing portion 553 are replaced with those of the first current collection component 510 and the first wing portion 551.

Referring to FIGS 12 and 13, the first current collection component 510 may include a first cutout 512 formed at one side (e.g., a first edge surface) in the width direction (y-axis direction), and a second cutout 513 formed at a remaining side (e.g., a second edge surface opposite to the first edge surface).

The first cutout 512 and the second cutout 513 may each have a rectangular shape, and may be formed in the same column. Here, the expression "formed in the same column" means that the positions in the longitudinal direction (x-axis direction) in the first current collection component 510 (which may, e.g., correspond to the direction from the first current collection component 510 to the second current collection component 530) overlap each other, for example that the first and second cutouts 512, 513 are aligned with each other in the direction from the first current collection component 510 to the second current collection component 530, e.g., as illustrated in FIG. 12.

A shape of the first wing portion 551 may correspond to that of the first current collection component 510. In other words, the shape and size of the first wing portion 551 may be the same as those of the first current collection component 510 in which the cutouts 512 and 513 are formed.

As illustrated in FIG. 14, the first cutout 512 and the second cutout 513 may be formed in different columns in the first current collection component 510. Here, the expression "formed in different columns" means that the positions in the longitudinal direction (x-axis direction) in the first current collection component 510 do not overlap each other. In other words, the first cutout 512 and the second cutout 513 may be formed at different positions (e.g., be displaced with respect to each other) in the longitudinal direction (x-axis direction) in the first current collection component 510.

According to the present disclosure, a portion of the first electrode tab 311 disposed under the first cutout 512 and the second cutout 513 may be exposed without being blocked at an upper side thereof by the first wing portion 551 or the first current collection component 510. Accordingly, the first electrode tab 311 may be coupled to the upper surface of the first current collection component 510 by bypassing the first wing portion 551 without being excessively bent (e.g., by arranging the first electrode tab 311 in one or both of the first and second cutouts 512, 513). Therefore, the electrical stability of the secondary battery 10 can be improved.

Hereinafter, a current collector and a secondary battery according to a third embodiment of the present disclosure will be described.

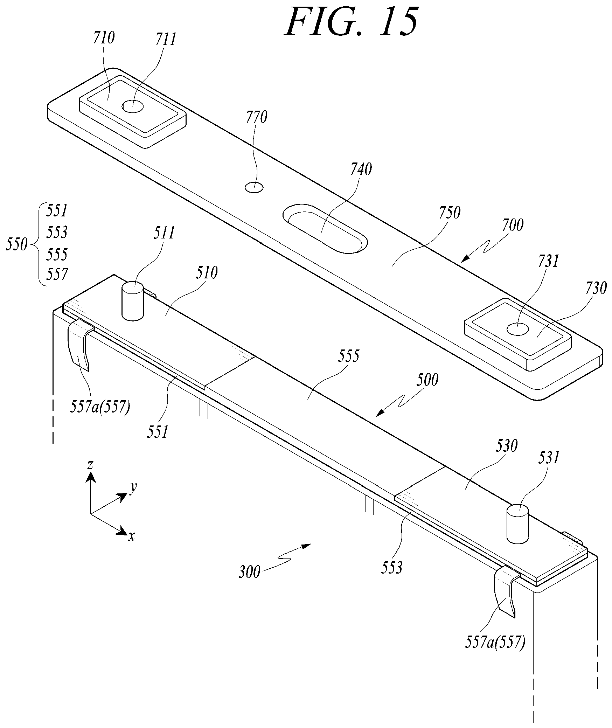

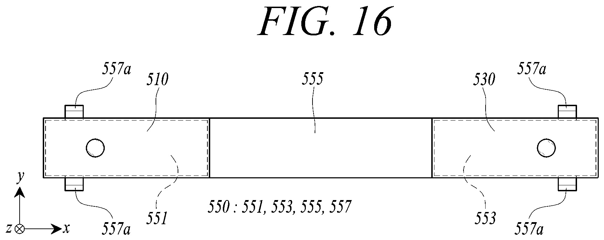

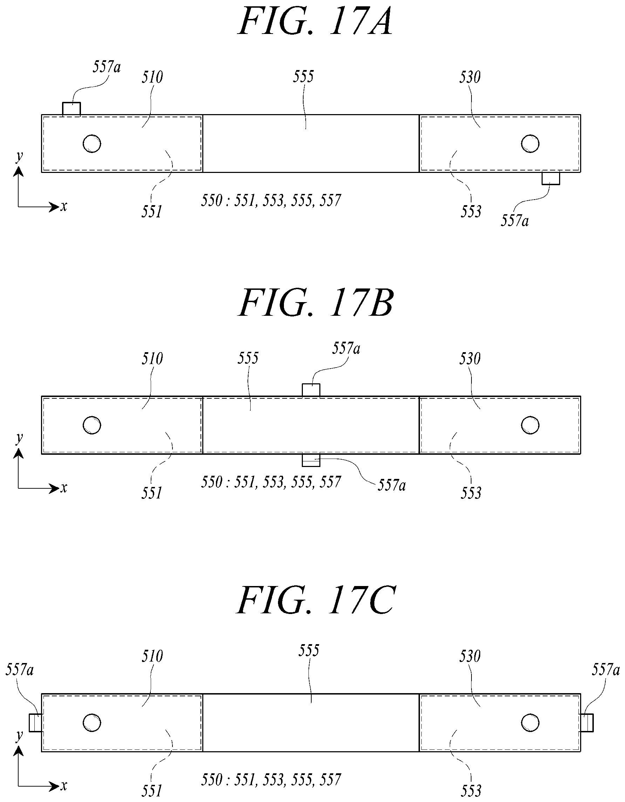

FIG. 15 is a perspective view illustrating a current collector for secondary batteries according to the third embodiment of the present disclosure. FIG. 16 is a top view illustrating the current collector for secondary batteries of FIG. 15. FIG. 17 illustrates a modified example of a fastening rod of FIG. 16.

The secondary battery according to the third embodiment of the present disclosure has the same structure as the secondary battery according to the first embodiment described above, except for a fastening rod 557a (e.g., as an example for a projection of fastening means); therefore, a redundant description of the same configuration will be omitted.

Referring to FIGS. 15 and 16, the current collector 500 for secondary batteries may further include a fastening portion 557 (e.g., as an example of fastening means) that fastens the insulating connector 550 to an upper surface of the electrode assembly 300.

The insulating connector 550 may be supported on a portion of the electrode assembly 300 by the fastening portion 557 and thereby fastened to the upper surface of the electrode assembly 300.

Specifically, the fastening portion 557 may include a plurality of fastening rods 557a that grip opposite side surfaces in the width direction (y-axis direction) of the electrode assembly 300.

The fastening rods 557a may be formed of an insulating material. A pair of fastening rods 557a may be formed at opposite side surfaces of the first wing portion 551 in the width direction (y-axis direction), and/or another pair of fastening rods 557a may be formed at opposite side surfaces of the second wing portion 553 in the width direction (y-axis direction).

Taking the first wing portion 551 as a representative example, a pair of fastening rods 557a may protrude outward from the first wing portion 551 in the width direction (y-axis direction), and ends of the fastening rods 557a may be bent in a direction toward the electrode assembly 300 (in a -z-axis direction).

The pair of fastening rods 557a may be secured in place by pressing the bent ends thereof onto opposite side surfaces of the electrode assembly 300 in the width direction (y-axis direction).

The insulating connector 550 may be supported by the plurality of fastening rods 557a and thereby fastened to the upper surface of the electrode assembly 300.

Referring to FIG.S 17A-C, the pair of fastening rods 557a (and likewise any other projections of fastening means, if embodied differently) may be formed at various positions.

For example, as shown in FIG. 17A, the pair of fastening rods 557a may be formed on a +y-axis direction side surface of the first wing portion 551 and on a -y-axis direction side surface of the second wing portion 553 (e.g., diagonally opposed). Alternatively, as shown in FIG. 17B, the pair of fastening rods 557a may be formed on opposite side surfaces of the intermediate connection portion 555 in the width direction (y-axis direction), e.g. laterally opposed. As shown in FIG. 17C, the pair of fastening rods 557a may be formed on a -x-axis direction side surface of the first wing portion 551 and on a +x-axis direction side surface of the second wing portion 553, e.g., longitudinally opposed.

According to the present embodiment, the insulating connector 550 may be fastened to the upper surface of the electrode assembly 300 by the fastening rods 557a. Therefore, wobbling can be prevented when the connection terminals 511 and 531 (see FIG. 15) are inserted into the terminal holes 711 and 731 (see FIG. 15). As a result, the assemblability of the secondary battery 10 may be improved.

Hereinafter, a current collector and a secondary battery according to a fourth embodiment of the present disclosure will be described.

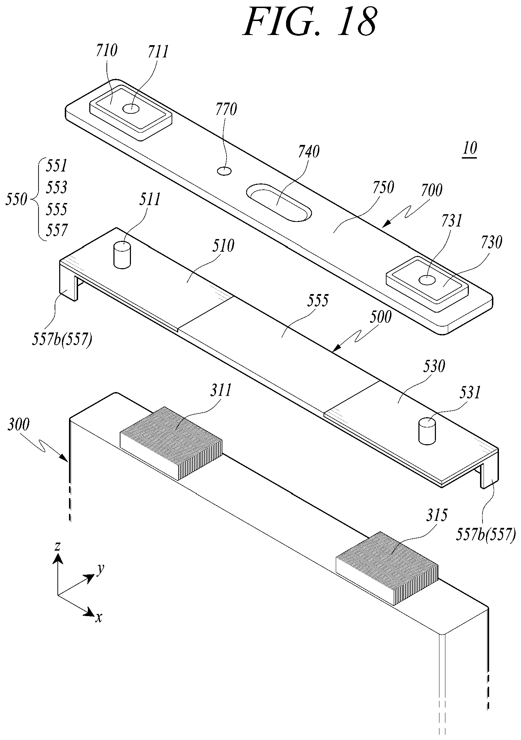

FIG. 18 is a perspective view illustrating a current collector of the secondary battery according to the fourth embodiment of the present disclosure.

The secondary battery according to the fourth embodiment of the present disclosure has the same structure as the secondary battery according to the first embodiment, except for a corner guard 557b (e.g., as another example for a projection of fastening means); therefore, a redundant description of the same configuration will be omitted.

Referring to FIG. 18, the fastening portion 557 (e.g., as an example of fastening means) may include a plurality of corner guards 557b that press corners of the electrode assembly 300.

The plurality of corner guards 557b may be formed of an insulating material. The plurality of the corner guards 557b may be formed in pairs at a corner of the first wing portion 551 and a corner of the second wing portion 553. The pair of the corner guards 557b may be formed to face each other in a diagonal direction.

The pair of corner guards 557b may have a shape extending toward the electrode assembly 300 from the corner of the first wing portion 551 and the corner of the second wing portion 553. The pair of corner guards 557b may enclose diagonally opposite corners of the electrode assembly 300.

The pair of corner guards 557b may guide the insulating connector 550 along the diagonally opposite corners of the electrode assembly 300, and may press the diagonally opposite corners of the electrode assembly 300 to fasten the insulating connector 550 to the upper surface of the electrode assembly 300.

According to the present disclosure, the insulating connector 550 may be fastened to the upper surface of the electrode assembly 300 by the corner guards 557b. Therefore, wobbling can be prevented when the connection terminals 511 and 531 (see FIG. 15) are inserted into the terminal holes 711 and 731 (see FIG. 15). As a result, the assemblability of the secondary battery 100 can be improved.

Hereinafter, a current collector and a secondary battery according to a fifth embodiment of the present disclosure will be described.

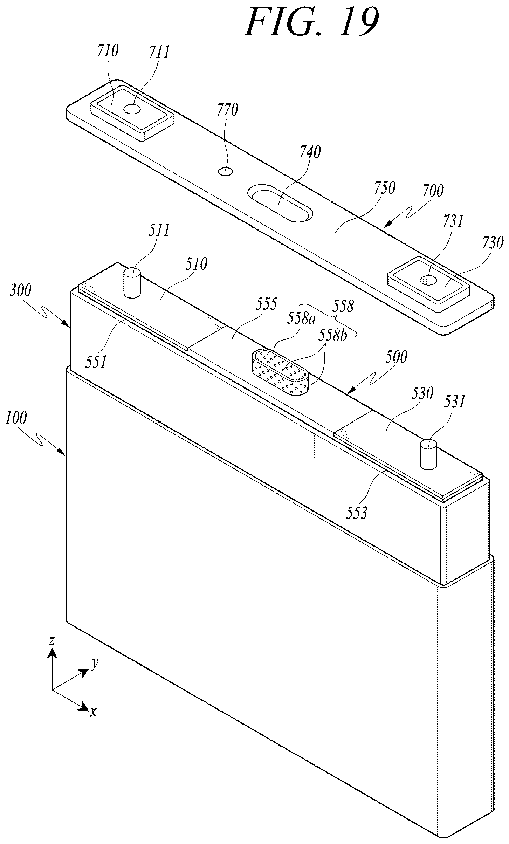

FIG. 19 is a perspective view illustrating a current collector of the secondary battery according to the fifth embodiment of the present disclosure.

The secondary battery according to the fifth embodiment of the present disclosure has the same structure as the secondary battery according to the first embodiment, except for a leakage blocking portion 558; therefore, a redundant description of the same configuration will be omitted.

Referring to FIG. 19, the leakage blocking portion 558 may be coupled to the upper surface of the intermediate connection portion 555.

The leakage blocking portion 558 may protrude upward from the upper surface of the intermediate connection portion 555 toward the vent hole 740. In other words, the vent hole 740 may be positioned above (in the +z-axis direction of) the leakage blocking portion 558. Facing the vent hole 740, an upper portion of the leakage blocking portion 558 may be open. A lower portion of the leakage blocking portion 558 may be blocked by the intermediate connection portion 555, or alternatively, may be open toward the electrode assembly 300 by penetrating the intermediate connection portion 555.

The leakage blocking portion 558 may be sectioned into an internal space and a sidewall 558a.

In a plan view (in the +z-axis direction) of the leakage blocking portion 558, a shape defined by the sidewall 558a may correspond to the shape of the vent hole 740. The sidewall 558a may have the same shape and the same size as the vent hole 740. For example, a shape defined by an inner periphery of the sidewall 558a may match the shape of the vent hole 740.

Accordingly, the sidewall 558a may be supported between the intermediate connection portion 555 and the cap plate 750, and the open upper portion of the leakage blocking portion 558 may be disposed to face the vent hole 740. In this case, a height of the sidewall 558a may be smaller than that of the connection terminals 511 and 531.

A plurality of pores 558b may be formed in the sidewall 558a.

In the case where the internal pressure of the casing 100 exceeds a preset pressure value and the vent hole 740 thus opens, air inside the casing 100 may pass through the pores 558b, but the electrolyte inside the casing 100 may be blocked by the sidewall 558a.

In other words, the leakage blocking portion 558 may block the electrolyte while selectively allowing only air to flow into the internal space through the plurality of pores 558b. The air introduced into the internal space may be discharged to the outside through the vent hole 740.

In the present embodiment, the leakage blocking portion 558 can prevent the electrolyte inside the casing 100 from leaking to the outside of the vent hole 740, while allowing only air inside the casing 100 to be discharged to the outside through the vent hole 740. Accordingly, it is possible to solve the problem in which not only air but also the electrolyte is discharged to the outside when the vent hole 740 opens.

Hereinafter, a current collector and a secondary battery according to a sixth embodiment of the present disclosure will be described.

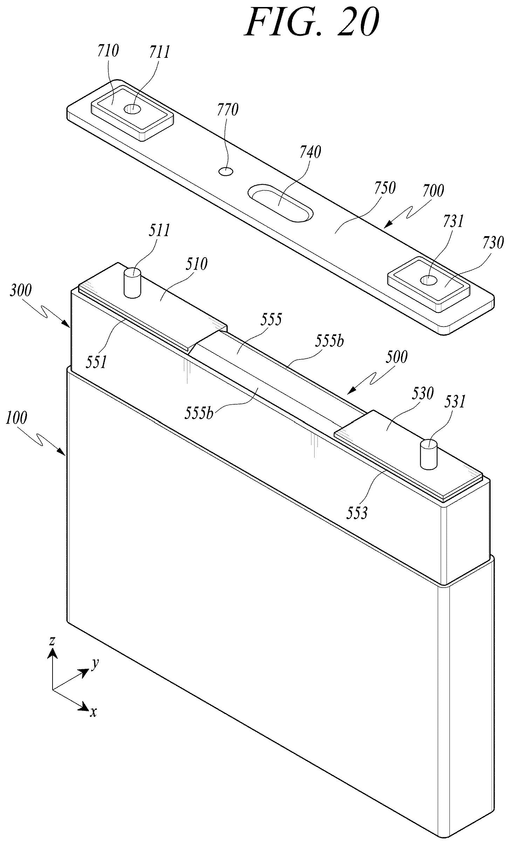

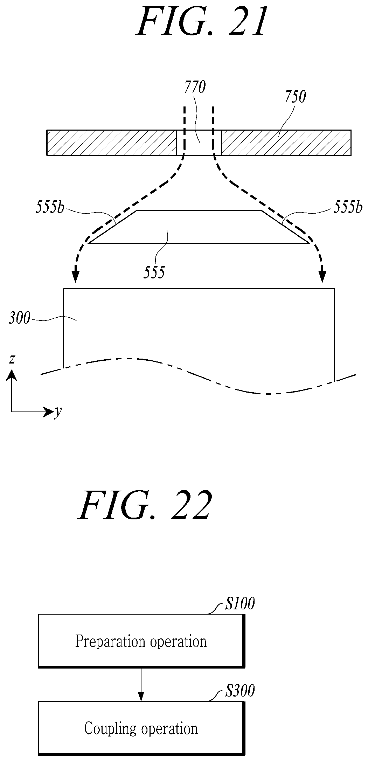

FIG. 20 is a perspective view illustrating a current collector of the secondary battery according to the sixth embodiment of the present disclosure. FIG. 21 is a side view of the current collector of FIG. 20.

The secondary battery according to the sixth embodiment of the present disclosure has the same structure as the secondary battery according to the first embodiment, except for an intermediate connection portion 555; therefore, a redundant description of the same configuration will be omitted.

Referring to FIGS. 20 and 21, width direction (y-axis direction) side surfaces 555b of the intermediate connection portion 555 may each have an inclined cross-section. In other words, the edge surfaces of the intermediate connection portion 555 extending between the first and second current collection components 510, 530 may be beveled.

Specifically, the width-direction side surfaces 555b of the intermediate connection portion 555 may be inclined downward. The width-direction side surfaces 555b may be inclined at an angle ranging from approximately 30° to approximately 70°, and preferably from 40° to 60°, with respect to a bottom surface of the intermediate connection portion 555 (which may, e.g., correspond to an angle from approximately 110° to approximately 150°, preferably from approximately 120° to approximately 140° with respect to an upper surface of the intermediate connection portion 555). A width (y-axis direction length) of the intermediate connection portion 555 may increase from an upper portion thereof toward a lower portion thereof.

The electrolyte injection hole 770 may be positioned over the intermediate connection portion 555.

Electrolyte injected through the electrolyte injection hole 770 may be guided along the width-direction side surfaces 555b of the intermediate connection portion 555, and may be injected into the electrode assembly 300.

According to the present embodiment, the electrolyte injected through the electrolyte injection hole 770 may be reliably injected into the electrode assembly 300 along the width-direction side surfaces 555b of the intermediate connection portion 555, without flowing toward the current collection components 510 and 530 or the connection terminals 511 and 531.

Hereinafter, a method of manufacturing a current collector for secondary batteries that is provided in a secondary battery according to a seventh embodiment of the present disclosure will be described. This method may for example be used for manufacturing any one(s) of the current collectors and/or secondary batteries according to the first to sixth embodiments.

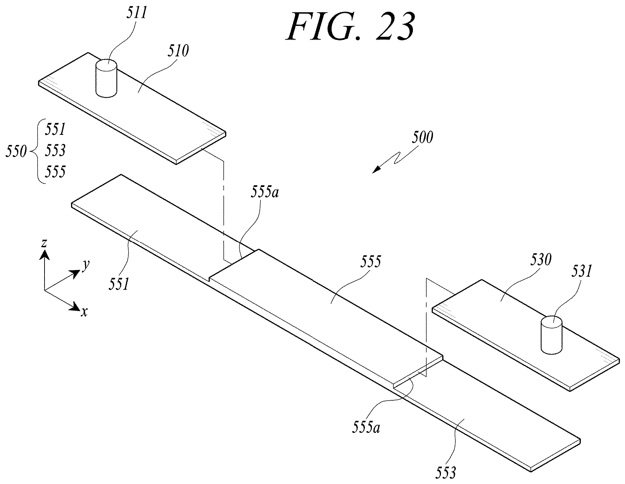

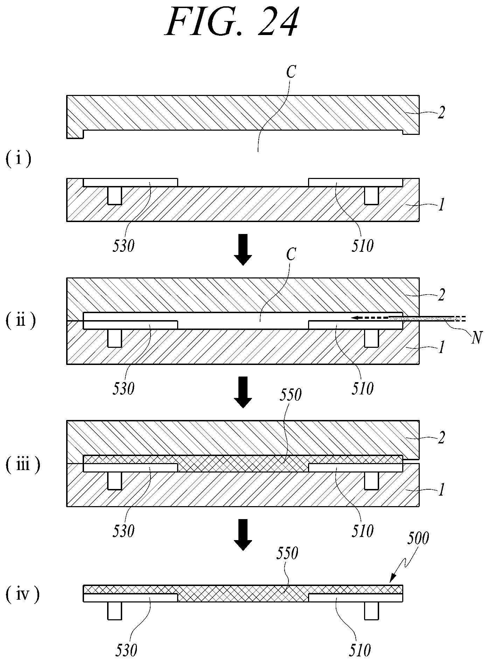

FIG. 22 is a flowchart illustrating the method of manufacturing the current collector provided in the secondary battery according to the seventh embodiment of the present disclosure. FIG. 23 is a perspective view for explaining a coupling operation of FIG. 22. FIG. 24 is a flowchart illustrating a modified example of the coupling operation of FIG. 22.

Except for the method of manufacturing the current collector 500 for secondary batteries, the secondary battery according to the seventh embodiment of the present disclosure has the same structure as the secondary battery according to the first embodiment described above; therefore, a redundant description of the same configuration will be omitted.

Referring to FIGS. 22 and 23, the method of manufacturing the collector for secondary batteries may include a preparation operation S100 of preparing the first current collection component 510 and the second current collection component 530, and a coupling operation S300 of coupling the first current collection component 510 and the second current collection component 530 by the insulating connector 550.

In the preparation operation (S100), the first current collection component 510 and the second current collection component 530 may be fabricated. The first current collection component 510 and the second current collection component 530 may be individually fabricated. The first current collection component 510 and the second current collection component 530 that are fabricated may be respectively provided with the first connection terminal 511 and the second connection terminal 531 (e.g., integrally formed therewith).

In the coupling operation S300, the first current collection component 510 and the second current collection component 530 that are fabricated may be coupled to each other by the insulating connector 550. The first current collection component 510 and the second current collection component 530 may be coupled to the edge surfaces (side surfaces) of the insulating connector 550, and more specifically, to the opposite side surfaces 555a of the intermediate connection portion 555, and thus connected to each other.

The current collection components 510 and 530 may be coupled to the insulating connector 550, and more specifically, to the opposite side surfaces 555a of the intermediate connection portion 555, by an adhesive. The adhesive may refer to any means for attaching the current collection components 510 and 530 to the solidified insulating connector 550. For example, the adhesive may be an adhesive film or an adhesive liquid.

Alternatively, in the coupling operation S300, the insulating connector 550 may be coupled to the first current collection component 510 and the second current collection component 530 by injection molding.

FIG. 24 is a flowchart for describing a modified example of the coupling operation of FIG. 22, and illustrates an injection molding process of the current collector 500 for secondary batteries.

Referring to FIG. 24, the current collector 500 for secondary batteries may be manufactured by injection molding. Specifically, the first current collection component 510 and the second current collection component 530 may be inserted into a cavity C inside molds 1 and 2, and the insulating connector 550 may be formed by injection molding. During the injection molding process of the insulating connector 550, the inserted first current collection component 510 and the inserted second current collection component 530 may be coupled to the insulating connector 550.

More specifically, the current collector 500 for secondary batteries may be manufactured through (i) a process of opening the molds 1 and 2 and inserting the first current collection component 510 and the second current collection component 530 into the cavity C, (ii) a process of closing the molds 1 and 2 and injecting a molten material into the cavity C through a nozzle N, (iii) a process of forming the insulating connector 550 by cooling the molten material charged into the cavity C, and (iv) a process of separating the formed insulating connector 550 from the molds 1 and 2.

In other words, the current collector 500 for secondary batteries may be manufactured by insert injection molding. The first current collection component 510 and the second current collection component 530 may be coupled during the injection molding process of the insulating connector 550.

According to the present embodiment, the first current collection component 510 and the second current collection component 530 may be separately coupled to the insulating connector 550, or may be coupled thereto through the injection molding process of the insulating connector 550. In the case of the injection molding process, since a separate process for coupling the current collection components 510 and 530 to the insulating connector 550 is not required, the productivity of the current collector 500 for secondary batteries may be improved.

As described above, according to an embodiment of the present disclosure, a current collection component has an integrated structure, thereby improving assemblability with a cap assembly.

While the present disclosure has been described with respect to the specific embodiments, it will be apparent to those skilled in the art that various changes or modifications of the present disclosure are possible by adding, changing, or deleting components without departing from the spirit of the present disclosure as defined in the following claims. It should be noted that these changes or modifications also fall within the scope of the present disclosure.

In view of the above, it will be appreciated that the present invention also provides the following itemized embodiments. Any of these embodiments may additionally comprise any feature or combination of features of the current collector, the secondary battery and/or the method of manufacturing a current collector according to any one of the embodiments described above.

Embodiment 1: A current collector for secondary batteries, comprising:
a first current collection component provided with a first connection terminal;
a second current collection component provided with a second connection terminal; and
an insulating connector coupled to a side surface of the first current collection component and a side surface of the second current collection component, the insulating connector connecting the first current collection component and the second current collection component that are spaced apart from each other.

Embodiment 2: The current collector according to embodiments 1, wherein the insulating connector comprises:
an intermediate connection portion connecting the side surface of the first current collection component and the side surface of the second current collection component to each other;
a first wing portion formed on one side of the intermediate connection portion, and located on a lower surface of the first current collection component; and
a second wing portion formed on another side of the intermediate connection portion, and located on a lower surface of the second current collection component.

Embodiment 3: The current collector according to embodiment 2, wherein the intermediate connection portion, the first wing portion, and the second wing portion are formed of an insulating material.

Embodiment 4: The current collector according to embodiment 2 or 3, wherein the intermediate connection portion, the first wing portion, and the second wing portion are integrally formed.

Embodiment 5: The current collector according to any one of embodiments 1 to 4, wherein the insulating connector is fabricated by injection molding.

Embodiment 6: The current collector according to any one of embodiments 2 to 5, wherein side surfaces of the intermediate connection portion that are in contact with the first current collection component and the second current collection component each have a cross-section perpendicular to an upper surface of the intermediate connection portion.

Embodiment 7: The current collector according to any one of embodiments 2 to 5, wherein side surfaces of the intermediate connection portion that are in contact with the first current collection component and the second current collection component each have an inclined cross-section.

Embodiment 8: The current collector according to any one of embodiments 2 to 7, wherein a shape of the first wing portion corresponds to a shape of the first current collection component.

Embodiment 9: The current collector according to any one of embodiments 2 to 8, wherein the first wing portion is located to cover a portion of the lower surface of the first current collection component.

Embodiment 10: The current collector according to any one of embodiments 1 to 9, wherein the first current collection component includes a first cutout formed in one side surface thereof, and a second cutout formed in a remaining side surface thereof.

Embodiment 11: The current collector according to embodiment 10, wherein the first cutout and the second cutout are formed in different columns.

Embodiment 12: The current collector according to any one of embodiments 1 to 11, further comprising a fastening portion provided to fasten the insulating connector to an upper surface of an electrode assembly.

Embodiment 13: The current collector according to any one of embodiments 1 to 12,
wherein a leakage blocking portion is coupled to an upper surface of the intermediate connection portion, and
wherein a plurality of pores are formed in a sidewall of the leakage blocking portion.

Embodiments 14: The current collector according to any one of embodiments 2 to 13, wherein a width-direction side surface of the intermediate connection portion has an inclined cross-section.

Embodiment 15: A secondary battery comprising:
a casing:
an electrode assembly accommodated in the casing, the electrode assembly including a first electrode, a separator, and a second electrode;
a first electrode tab coupled to the first electrode;
a second electrode tab coupled to the second electrode;
a current collector comprising a first current collection component coupled to the first electrode tab and provided with a first connection terminal, a second current collection component coupled to the second electrode tab and provided with a second connection terminal, and an insulating connector coupled to a side surface of the first current collection component and a side surface of the second current collection component, the insulating connector connecting the first current collection component and the second current collection component that are spaced apart from each other; and
a cap assembly sealing the casing and including a first terminal and a second terminal positioned to be respectively connected to the first connection terminal and the second connection terminal.

Embodiment 16: The secondary battery according to embodiment 15,
wherein the cap assembly includes a cap plate formed with a first terminal hole into which the first connection terminal is inserted, and a second terminal hole into which the second connection terminal is inserted, and
wherein a distance between the first terminal hole and the second terminal hole is identical to a distance between the first connection terminal and the second connection terminal.

Embodiment 17: The secondary battery according to embodiment 15 or 16, wherein the first electrode tab is coupled to an upper surface of the first current collection component.

Embodiment 18: A method of manufacturing a current collector for secondary batteries according to any one of embodiments 1 to 14, the method comprising:
a preparation operation of preparing the first current collection component and the second current collection component; and
a coupling operation of connecting the first current collection component and the second current collection component by the insulating connector.

Embodiment 19: The method according to embodiment 18, wherein the coupling operation comprising coupling the first current collection component and the second current collection component to the insulating connector by an adhesive.

Embodiment 20: The method according to embodiment 18 or 19, wherein the coupling operation comprises coupling the first current collection component and the second current collection component to the insulating connector by injection molding the insulating connector.

## Claims

1. A current collector (500) for a secondary battery (10), comprising:
a first current collection component (510) provided with a first connection terminal (511) for connecting to a first terminal (710) of the secondary battery (10);
a second current collection component (530) provided with a second connection terminal (531) for connecting to a second terminal (730) of the secondary battery (10); and
an insulating spacer (550) coupled to an edge surface of the first current collection component (510) and an edge surface of the second current collection component (530), the insulating spacer (550) connecting the first current collection component (510) and the second current collection component (530) so as to be spaced apart from each other.

2. The current collector (500) according to claim 1, wherein the insulating spacer (550) comprises:
an intermediate connection portion (555) connecting the edge surface of the first current collection component (510) and the edge surface of the second current collection component (530) to each other;
a first wing portion (551) on a first side of the intermediate connection portion (555), and arranged on a lower surface of the first current collection component (510) opposite to the first connection terminal (511); and
a second wing portion (553) on a second side of the intermediate connection portion (555) opposite to the first side, and arranged on a lower surface of the second current collection component (530) opposite to the second connection terminal (531).

3. The current collector (500) according to claim 2, wherein:
a cross-section of the first wing portion (551) is congruent with the lower surface of the first current collection component (510) or the first wing portion (551) partially covers the lower surface of the first current collection component (510); and/or
a cross-section of the second wing portion (553) is congruent with the lower surface of the second current collection component (530) or the second wing portion (553) partially covers the lower surface of the second current collection component (530).

4. The current collector (500) according to claim 2 or 3, wherein:
the intermediate connection portion (555), the first wing portion (551) and the second wing portion (553), are formed of an insulating material and/or wherein the intermediate connection portion (555) and one or both of the first wing portion (551) and the second wing portion (553) are integrally formed; and/or
one or both of the first wing portion (551) and the second wing portion (553) each comprise a cutout in an edge surface thereof, in particular a pair of cutouts in opposite edge surfaces thereof.

5. The current collector (500) according to any one of the preceding claims, wherein:
the insulating spacer (550) is or comprises an injection-molded part; and/or
one or more edge surfaces of the first current collection component (510) and/or one or more edge surfaces of the second current collection component (530) are aligned with a respective edge surface of the insulating spacer (550); and/or
one or both of the first and second current collection components (510, 530) is/are a planar current collection member with the first and second connection terminal (531), respectively, provided thereon.

6. The current collector (500) of any one of the preceding claims, wherein one or both of:
an upper surface of the current collector (500) is level, the upper surface of the current collector (500) being formed by an upper surface of the first current collection component (510) on which the first connection terminal (511) is provided, an upper surface of the second current collection component (530) on which the second connection terminal (531) is provided and an upper surface of the insulating spacer (550) extending between the upper surfaces of the first and second current collection components (530); and
a lower surface of the current collector (500) is level, the lower surface of the current collector (500) being formed by a lower surface of the insulating spacer (550) opposite to the upper surface of the insulating spacer (550) and, optionally, one or both of the lower surface of the first current collection component (510) opposite to the first connection terminal (511) and the lower surface of the second current collection component (530) opposite to the second connection terminal (531).

7. The current collector (500) of any one of the preceding claims, wherein one or both of the first and second connection terminals (511, 531) protrude from the first and second current collection component (510, 530), respectively, in particular wherein one or both of the first and second connection terminals (511, 531) are integrally formed with the first and second current collection component (510, 530), respectively.

8. The current collector (500) according to any one of the preceding claims, wherein:
a contact surface (555a) of the insulating spacer (550) that is in contact with the edge surface of the first current collection component (510) is perpendicular to or inclined with respect to the upper surface of the insulating spacer (550) extending between the upper surfaces of the first and second current collection components (510, 530) on which the first and second connection terminal (531), respectively, are provided, and/or
a contact surface (555a) of the insulating spacer (550) that is in contact with the edge surface of the second current collection component (530) is perpendicular to or inclined with respect to the upper surface of the insulating spacer (550) extending between the upper surfaces of the first and second current collection components (510, 530) on which the first and second connection terminal (511, 531), respectively, are provided.

9. The current collector (500) according to any one of the preceding claims, wherein one or both of the first and second current collection components (510, 530) include a cutout (512, 513) in an edge surface thereof,
in particular wherein one or both of the first and second current collection component (510, 530) include a pair of cutouts (512, 513) in opposite edge surfaces of the respective current collection component, wherein optionally said pair of cutouts (512, 513) is aligned with each other or displaced with respect to each other in a direction from the first current collection component (510) to the second current collection component (530).

10. The current collector (500) according to any one of the preceding claims, further comprising one or both of:
fastening means (557) for fastening the current collector (500) to an electrode assembly (300), in particular wherein said fastening means (557) comprise one or more projections (557a, 557b) on the insulating spacer (550) for fitting and/or clamping the insulating spacer (550) onto the electrode assembly (300); and
a leakage blocking portion (558) on and/or in the insulating spacer (550), the leakage blocking portion (558) being configured to block an electrolyte while allowing for air to pass through the leakage blocking portion (558), in particular wherein the leakage blocking portion (558) comprises a wall, in particular a sidewall (558a) protruding from the insulating spacer (550), having a plurality of pores (558b) formed in the wall (558a) of the leakage blocking portion (558).

11. The current collector (500) according to any one of the preceding claims, wherein one or both edge surfaces of the insulating spacer (550) extending between the first and second current collection components (510, 530) is/are beveled.

12. A secondary battery (10) comprising:
a casing (100);
an electrode assembly (300) accommodated or to be accommodated in the casing (100), the electrode assembly (300) including a first electrode (317) and a second electrode (319);
a first electrode tab (311) coupled to the first electrode (317);
a second electrode tab (315) coupled to the second electrode (319);
a current collector (500) according to any one of the preceding claims, wherein the first current collection component (510) is coupled or to be coupled to the first electrode tab (311) and the second current collection component (530) is coupled or to be coupled to the second electrode tab (315); and
a first terminal (710) and a second terminal (730) respectively connected or to be connected to the first connection terminal (511) and the second connection terminal (531).

13. The secondary battery (10) according to claim 12,
further comprising a cap assembly (700) that seals or is to seal the casing (100) and includes the first and second terminals (710, 730) and a cap plate (750) formed with a first terminal hole (711) into which the first connection terminal (511) is inserted or is to be inserted, and a second terminal hole (731) into which the second connection terminal (531) is inserted or is to be inserted,
in particular wherein the insulating spacer (550) connects the first and second current collection components (510, 530) so as to be spaced apart from each other by a constant distance that is identical to a distance between the first terminal hole (711) and the second terminal hole (731).

14. The secondary battery (10) according to claim 12 or 13, wherein one or both of the first electrode tab (311) and the second electrode tab (315) is/are coupled to a surface of the first and second current collection component (510, 530), respectively, that faces away from the electrode assembly (300), in particular wherein one or both of the first electrode tab (311) and the second electrode tab (315) comprises/comprise a pair of electrode tabs bent around opposite edge surfaces of the first and second current collection component (510, 530), respectively, onto said surface of the first and second current collection component (510, 530), respectively.

15. A method of manufacturing a current collector (500) for a secondary battery (10) according to any one of claims 1 to 11, the method comprising:
preparing the first current collection component (510) and the second current collection component (530); and
connecting the first current collection component (510) and the second current collection component (530) by the insulating spacer (550),
in particular wherein connecting the first current collection component (510) and the second current collection component (530) by the insulating spacer (550) comprises coupling the first current collection component (510) and the second current collection component (530) to the insulating spacer (550) by an adhesive and/or by injection molding the insulating spacer (550).
